# EUROPEAN PATENT APPLICATION

(11) **EP 4 835 652 A1**
(43) Date of publication of application: **04.11.2026**
(21) Application number: 25829308.3
(22) Date of filing: 26.02.2025
(51) Int. Cl.: G06F 9/448

(54) **ACTION EXECUTION METHOD AND SYSTEM, AND DEVICE**

(30) Priority: 20.06.2024 CN 202410808507; 13.08.2024 CN 202411114456
(71) Applicant: Huawei Technologies Co., Ltd., Shenzhen, Guangdong 518129 (CN)
(72) Inventor: SONG, Kaikai, Shenzhen, Guangdong 518129 (CN); SI, Hongjie, Shenzhen, Guangdong 518129 (CN); CHEN, Qimeng, Shenzhen, Guangdong 518129 (CN); XU, Mengwen, Shenzhen, Guangdong 518129 (CN); WU, Youguo, Shenzhen, Guangdong 518129 (CN)
(74) Representative: Huawei European IPR
(86) International application number: PCT/CN2025/079271
(87) International publication number: WO 2025/260816

(57) **Abstract**

This application discloses a task execution method, a device, and a system, and relates to the field of terminal technologies, to respond to user instructions in various scenarios accurately, reliably, and in a timely manner, including a user instruction in a complex scenario, thereby improving user experience. In this solution, when determining a task corresponding to a user instruction, a system proxy may perform fusion analysis and inference based on a historical record of executing a historical task related to the task, to finally determine the task corresponding to the user instruction. In this way, a user does not need to input an excessively complex instruction. In addition, the task corresponding to the user instruction may be further accurately identified, to respond to the user instruction accurately, reliably, and in a timely manner.

## Description

This application claims priorities to Chinese Patent Application No. 202410808507.3, filed with the China National Intellectual Property Administration on June 20, 2024, and entitled "TASK EXECUTION METHOD, DEVICE, AND SYSTEM", and to Chinese Patent Application No. 202411114456.0, filed with the China National Intellectual Property Administration on August 13, 2024, and entitled "TASK EXECUTION METHOD, DEVICE, AND SYSTEM", both of which are incorporated herein by reference in their entireties.

### TECHNICAL FIELD

This application relates to the field of terminal technologies, and in particular, to a task execution method, a device, and a system.

### BACKGROUND

Currently, a language model-based smart assistant is widely applied to a human-machine interaction process. The smart assistant can simplify a user operation and accurately respond to a user instruction in the human-machine interaction process. For example, the smart assistant may analyze and infer the user instruction based on a language model, create a corresponding task, and execute the task, to accurately respond to the user instruction. However, a conventional smart assistant can execute only a simple task. In some complex scenarios such as a scenario involving a plurality of cross-application invocations, a scenario involving a complex inference process, and a scenario in which a problem needs to be clarified, a user instruction cannot be accurately responded to.

### SUMMARY

This application provides a task execution method, a device, and a system, to respond to user instructions in various scenarios in a timely manner, accurately, and reliably, including a user instruction in a complex scenario, thereby improving user experience.

To achieve the foregoing objective, the following technical solutions are used in this application:
According to a first aspect, a task execution method is provided. The method may be applied to a system including a system proxy and at least one application control proxy. The method includes: The system proxy obtains a user instruction; the system proxy determines, according to the user instruction and first memory information, a task corresponding to the user instruction, where the first memory information includes a historical record of executing a historical task related to the task; and the system proxy indicates the application control proxy to execute the task.

According to the solution provided in the first aspect, when determining the task corresponding to the user instruction, the system proxy may perform fusion analysis and inference based on the historical record of executing the historical task related to the task, to finally determine the task corresponding to the user instruction. In this way, a user does not need to input an excessively complex instruction. In addition, the task corresponding to the user instruction may be further accurately identified, to respond to the user instruction accurately, reliably, and in a timely manner.

In a possible implementation, the method further includes: In a process in which the application control proxy executes the task, the system proxy interacts with the user based on a task clarification request of the application control proxy, to obtain a clarification result; and the system proxy indicates the application control proxy to continue to execute the task based on the clarification result. In this way, one or more rounds of interaction may be used to clarify some problems about the task and/or supplement some details about the task, to implement clear, timely, accurate, and reliable execution of the task. On the premise of simplifying a user operation, user instructions in different scenarios, including a user instruction in a simple scenario and a user instruction in a complex scenario, are intelligently responded to.

In a possible implementation, that the system proxy interacts with the user based on the task clarification request of the application control proxy, to obtain the clarification result includes: The system proxy interacts with the user based on the task clarification request of the application control proxy, to obtain information input by the user; and the system proxy indicates, based on the information input by the user, the application control proxy to execute a clarification task, and obtains the clarification result based on an execution result of the clarification task. In this way, one or more rounds of interaction may be used to clarify some problems about the task and/or supplement some details about the task, to implement clear, timely, accurate, and reliable execution of the task. On the premise of simplifying a user operation, user instructions in different scenarios, including a user instruction in a simple scenario and a user instruction in a complex scenario, are intelligently responded to.

In a possible implementation, the method further includes: The application control proxy executes the task based on the task and second memory information of the application control proxy, where the second memory information includes a historical record of executing, by the application control proxy, the historical task related to the task. In this way, the task can be supplemented based on the historical record, so that the task can be clearly, accurately, reliably, and in a timely manner executed.

In a possible implementation, the method further includes: The system proxy splits the task into a plurality of subtasks, where the plurality of subtasks include a first subtask and a second subtask; and the system proxy determines a first application control proxy used to execute the first subtask, and determines a second application control proxy used to execute the second subtask. That the system proxy indicates the application control proxy to execute the task includes: The system proxy distributes the first subtask to the first application control proxy, and distributes the second subtask to the second application control proxy. In this way, on the premise of simplifying the user operation, the user instructions in different scenarios, especially the user instruction in the complex scenario, can be intelligently responded to.

In a possible implementation, that the system proxy indicates the application control proxy to execute the task includes: The system proxy distributes the task to a third application control proxy. In this way, on the premise of simplifying the user operation, the user instructions in different scenarios, including the user instruction in the simple scenario, can be intelligently responded to.

In a possible implementation, that the system proxy determines, according to the user instruction and the first memory information, the task corresponding to the user instruction includes: The system proxy determines, based on a language model and according to the user instruction and the first memory information, the task corresponding to the user instruction. In this way, fusion analysis and inference can be performed by using the language model, to accurately determine the task corresponding to the user instruction.

In an example, the language model includes at least one of the following: a large-scale language model (large-scale language model, LLM) and a multi-modal large-scale language model (multi-modal large-scale language model, MLLM).

In a possible implementation, the system is deployed on a server, and that the system proxy obtains the user instruction includes: The system proxy receives the user instruction from an electronic device. The method further includes: The application control proxy invokes an execution engine, a tool, or an interface on the electronic device to execute the task. In this way, the task execution method provided in this application can be used in a device-cloud synergy architecture, thereby improving applicability of this solution.

In a possible implementation, the system is deployed on an electronic device, and the method further includes: The application control proxy invokes an execution engine, a tool, or an interface on the electronic device to execute the task. In this way, the task execution method provided in this application can be used in a single-device architecture, thereby improving applicability of this solution.

In a possible implementation, the system proxy is a system agent, and the application control proxy is a domain agent. In this way, the task execution method provided in this application can be used in a multi-agent (agent) architecture, thereby improving applicability of this solution.

According to a second aspect, an electronic device is provided. The electronic device includes: a memory, configured to store computer program instructions; and a processor, configured to execute the computer program instructions, to support the electronic device in implementing the method in any possible implementation of the first aspect.

According to a third aspect, a server is provided. The server includes: a memory, configured to store computer program instructions; and a processor, configured to execute the computer program instructions, to support the electronic device in implementing the method in any possible implementation of the first aspect.

According to a fourth aspect, a task execution system is provided. The task execution system includes an electronic device and/or a server, and the electronic device and/or the server are/is configured to support the task execution system in implementing the method in any possible implementation of the first aspect.

According to a fifth aspect, a computer program product including instructions is provided. When the computer program product is run on a computer, the computer is enabled to implement the method in any possible implementation of the first aspect.

According to a sixth aspect, a chip system is provided. The chip system includes a processing circuit and a storage medium. The storage medium stores computer program instructions. When the computer program instructions are executed by a processor, the method in any possible implementation of the first aspect is implemented. The chip system may include a chip, or may include a chip and another discrete component.

### BRIEF DESCRIPTION OF DRAWINGS

FIG. 1 is a diagram of a multi-layer proxy architecture according to an embodiment of this application;
FIG. 2 is a diagram of a multi-layer agent (agent) architecture according to an embodiment of this application;
FIG. 3A and FIG. 3B are a diagram of two task execution architectures according to an embodiment of this application;
FIG. 4A and FIG. 4B are a diagram of structures of two system architectures according to an embodiment of this application;
FIG. 5 is a diagram of a hardware structure of an electronic device according to an embodiment of this application;
FIG. 6A is an interaction diagram of a task execution process according to an embodiment of this application;
FIG. 6B is an interaction diagram of another task execution process according to an embodiment of this application;
FIG. 7A and FIG. 7B are a diagram of a task execution interaction process according to an embodiment of this application; and
FIG. 8A and FIG. 8B are a diagram of a task execution process for a user instruction in a specific application scenario according to an embodiment of this application.

### DESCRIPTION OF EMBODIMENTS

The following describes technical solutions in embodiments of this application with reference to accompanying drawings in embodiments of this application. In descriptions in embodiments of this application, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the descriptions in embodiments of this application, "a plurality of" means two or more.

The following terms "first", "second", and the like are merely intended to distinguish between different described objects, and impose no limitation on locations, sequences, priorities, quantities, content, or the like of the described objects. For example, if a described object is a "field", ordinal numbers before "fields" in a "first field" and a "second field" do not limit a location or an order between the "fields". The "first" and the "second" do not limit whether the "fields" modified by the "first" and "second" are in a same message, and the "first" and the "second" do not limit a sequence of the "first field" and the "second field". For another example, if a described object is a "level", ordinal numbers before "levels" in a "first level" and a "second level" do not limit a priority between the "levels". For another example, a quantity of described objects is not limited by an ordinal number, and may be one or more objects. For example, for a "first device", a quantity of "devices" may be one or more. In addition, objects modified by different prefixes may be the same or different. For example, if a described object is a "device", a "first device" and a "second device" may be a same type of devices, or different types of devices. For another example, if a described object is "information", "first information" and "second information" may be information of a same content or information of different content. In conclusion, in embodiments of this application, use of the prefix words, for example, ordinal numbers, used to distinguish between the described objects constitutes no limitation on the described objects. For descriptions of the described objects, refer to context descriptions in claims or embodiments. Use of the prefix words should not constitute a redundant limitation.

In addition, in embodiments of this application, "connection" may indicate a direct connection or an indirect connection, or may indicate an electrical connection or a communication connection. For example, a connection between two electrical elements A and B may mean that A is directly connected to B, or may mean that A is indirectly connected to B via another electrical element or a connection medium, or may mean that A is indirectly connected to B via another communication device or a communication medium, provided that A and B can communicate with each other.

As described in the background, a conventional smart assistant can execute only some simple tasks, and cannot accurately respond to a user instruction in a complex scenario.

In an example, when the smart assistant executes a corresponding task according to a user instruction, the smart assistant may perform analysis, inference, and other operations on the user instruction (for example, a prompt) by using a language model, to determine the task that needs to be executed and a tool used to execute the task, invoke the tool to execute the corresponding task, and feed back an execution result (observation) to the language model after the task is executed, to adjust the corresponding language model, so as to improve reliability and accuracy of analysis and inference results of the language model. In this process, an inference mode of the smart assistant is mainly to make a response (ReAct), and only one interaction, inference, and execution process is involved. The process is simple, and therefore, a task that can be processed is simple. In addition, in this process, the determined task that needs to be executed mainly depends on analysis and inference performed on the user instruction by using the language model. Therefore, accurate and reliable execution of the task strongly depends on accuracy and integrity of the user instruction, and a requirement on an instruction input by a user is high.

To process complex tasks in some complex scenarios, in an example, when a corresponding task is executed according to a user instruction, the smart assistant may follow an inner-outer loop mechanism, and analyze and infer the user instruction level by level by using the language model, to determine a task that needs to be executed and a tool used to execute the task, and invoke the tool to execute the corresponding task. In the inner-outer loop mechanism, an outer loop part is mainly used for management of a high-level task, for example, identifying a task according to a user instruction and dividing the task into a plurality of operable subtasks; and an inner loop part is mainly used for execution of a low-level task, for example, responsible for execution of a fine-grained subtask. The inner-outer loop mechanism followed by this solution can improve reliability and accuracy of analysis and inference results, improve reliability and efficiency of task execution, and facilitate integration and compatibility with an external tool. However, in this solution, an inference mode of the smart assistant is mainly task execution (Action), and only one interaction, inference, and execution process is still involved. The process is simple, and therefore, a task that can be processed is still simple. In addition, in this solution, the determined task that needs to be executed also mainly depends on analysis and inference performed on the user instruction by using the language model. Therefore, accurate and reliable execution of the task also strongly depends on accuracy and integrity of the user instruction, and a requirement on an instruction input by a user is also high.

In an example, when the smart assistant executes a corresponding task according to a user instruction, the smart assistant may complete analyzing, inferring, and identifying the task according to the user instruction (for example, a prompt) by using a language model, and perform operating system interaction by using a multi-modal agent (agent) architecture, to complete the task through navigation in a plurality of applications. The multi-modal agent (agent) architecture includes an application agent (App agent) and an execution agent (Act agent). The application agent (App agent) is configured to: split the task into a plurality of subtasks, and distribute the plurality of subtasks to a corresponding execution agent (Act agent). The execution agent (Act agent) is configured to execute the subtasks. This solution is similar to the foregoing inner-outer loop mechanism. Although reliability and accuracy of analysis and inference results can be improved, reliability and execution efficiency of task execution can be improved, and a possibility of integration and compatibility with an external tool can be improved, the solution still involves only one interaction, inference, and execution process. The process is simple, and therefore, a task that can be processed is still simple. In addition, the determined task that needs to be executed also mainly depends on analysis and inference performed on the user instruction by using the language model. Therefore, accurate and reliable execution of the task also strongly depends on accuracy and integrity of the user instruction, and a requirement on an instruction input by a user is also high.

It can be learned from the foregoing examples that the conventional smart assistant mainly involves a simple and fixed inference mode. Therefore, only a simple task can be executed, and user instructions cannot be accurately responded to in some complex scenarios such as a scenario involving a plurality of cross-application invocations, a scenario involving a complex inference process, and a scenario in which a problem needs to be clarified. In addition, the conventional smart assistant strongly depends on accuracy and integrity of the user instruction when determining the task that needs to be executed. Therefore, the requirement on the instruction input by the user is high.

With the emergence of speech models with higher computing capabilities and higher computing precision, such as a large-scale language model (large-scale language model, LLM) and a multi-modal large-scale language model (multi-modal large-scale language model, MLLM), advantages of a multi-layer proxy architecture based on the language model such as the LLM or the MLLM are increasingly obvious. For example, a smart assistant constructed based on the multi-layer proxy architecture can provide natural dialog understanding, multi-round dialog integration, multi-modal analysis and inference, hierarchical management of historical records, multi-layer task management and isolation, task switching, and the like through multi-layer proxy collaboration and division of labor by using the language model like the LLM or the MLLM as a super entry, to help users process various types of more complex tasks such as task-oriented, chat-oriented, question-and-answer, and artificial intelligence-generated content (AI-generated content, AIGC) tasks.

In the background of the multi-layer proxy architecture, embodiments of this application provide a task execution method based on the multi-layer proxy architecture. The method can respond to user instructions in different scenarios accurately, reliably, and in a timely manner, including a user instruction in a simple scenario and a user instruction in a complex scenario. For example, according to the task execution method provided in embodiments of this application, a smart assistant may perform related processing layer by layer based on a multi-layer proxy architecture including a system proxy and an application control proxy. For example, the system proxy determines a task according to a user instruction and a historical record that is about a historical task and that is recorded by the system proxy, splits the task into a plurality of subtasks, and distributes the plurality of subtasks to different application control proxies, and then the application control proxies complete the corresponding subtasks. When the application control proxy executes the subtask, the related subtask may be supplemented and the like based on a historical record that is of a related historical task and that is recorded by the application control proxy. In this way, the task for the user instruction can be executed more accurately, reliably, and in a timely manner. For example, the historical record may include but is not limited to session context. This is not limited.

In addition, when the system proxy needs to clarify some problems related to the task or supplement some details about the task, the smart assistant may further perform one or more rounds of interaction with the user to clarify the related task, and after the clarification, switch back to the system proxy to update or supplement the user instruction based on a clarification result and continue to perform task identification, task planning, task distribution, and the like; and/or when the application control proxy needs to clarify some problems related to the task or supplement some details about the task, the smart assistant may further perform one or more rounds of interaction with the user to clarify the related task, and after the clarification, switch back to the application control proxy to update or supplement the subtask based on a clarification result and continue to execute the subtask until the subtask is successfully executed. In this way, by using processes such as natural dialog understanding, multi-round dialog integration, multi-modal analysis and inference, hierarchical management of the historical records, multi-layer task management and isolation, and task switching, the multi-layer proxy architecture can support response of the user instructions in the complex scenarios such as the scenario involving a plurality of cross-application invocations, the scenario involving a complex inference process, and the scenario in which a problem needs to be clarified.

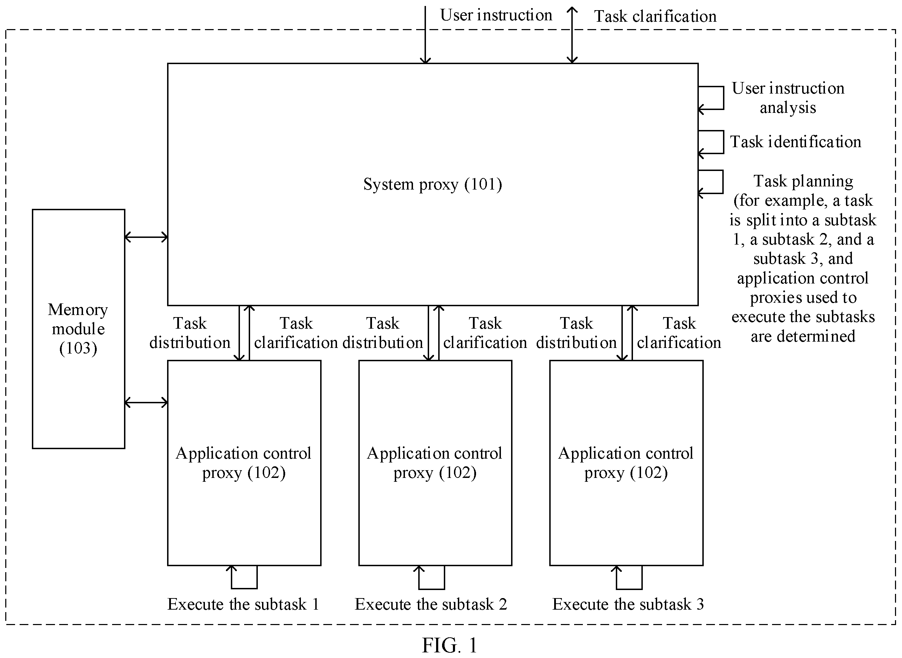

In an example, FIG. 1 is a diagram of a multi-layer proxy architecture according to an embodiment of this application. As shown in FIG. 1, the multi-layer proxy architecture includes a system proxy 101 and a plurality of application control proxies 102 (in FIG. 1, three application control proxies 102 are used as an example).

The system proxy 101 shown in FIG. 1 is configured to be responsible for one or more of user instruction analysis and inference, task identification, task planning, task distribution, task clarification, and the like. User instruction analysis and inference is, for example, analyzing and inferring a user instruction by using language models such as an LLM or an MLLM. Task identification is, for example, analyzing and identifying a control intention of a user according to the user instruction, first memory information, system context, and the like, to determine a corresponding task. Task planning is, for example, planning the identified task, for example, splitting the task and determining an application control proxy used to execute the task. Task distribution is, for example, distributing the task to the corresponding application control proxy 102 for subsequent execution. The first memory information includes a historical record of executing a historical task by the system proxy 101. For example, the first memory information includes session context of executing the historical task by the system proxy 101. This is not limited.

In an example, when the system proxy 101 determines the task for the user instruction, the system proxy 101 may further rewrite the user instruction with reference to the language model and a knowledge base, and determine a corresponding task based on a rewritten user instruction. For example, the system proxy 101 may rewrite the user instruction by using processes such as system context loading, retrieval or loading of the first memory information, named entity recognition, and hotword detection.

In some embodiments, in a process in which the system proxy 101 performs task identification, if some problems about the task need to be clarified or some details about the task need to be supplemented, the system proxy 101 may further perform one or more rounds of interaction with the user to clarify the task, and after completing clarification of the task, switch back to the system proxy to update or supplement the user instruction based on a clarification result and continue to perform task identification, task planning, task distribution, and the like.

In some embodiments, if the control intention of the user relates to a plurality of tasks, the system proxy 101 is further configured to: split the identified task into a plurality of subtasks, determine application control proxies 102 configured to execute the subtasks, and distribute the subtasks to the corresponding application control proxies 102 for subsequent execution. In FIG. 1, an example in which the system proxy 101 splits the identified task into a subtask 1, a subtask 2, and a subtask 3, and distributes the subtask 1, the subtask 2, and the subtask 3 to different application control proxies 102 respectively is used. The system proxy 101 may not synchronously distribute the subtask 1, the subtask 2, and the subtask 3 to the different application control proxies 102, or may distribute the subtasks one by one, and distribute a next subtask after receiving a response indicating that a subtask is successfully executed. This is not limited and is determined based on a specific situation.

In some embodiments, when the subtasks are distributed to the corresponding application control proxies 102, the system proxy 101 may further indicate a sequence in which the application control proxies 102 execute the subtasks. For example, the application control proxies 102 may need to synchronously execute the subtasks, or may sequentially execute the respective subtasks in a specified execution sequence.

In some embodiments, in a process in which the application control proxy 102 executes the task (for example, the subtask) based on an indication of the system proxy 101, if some problems about the task need to be clarified or some details about the task need to be supplemented, the system proxy 101 may further perform one or more rounds of interaction with the user based on a request of the application control proxy 102 to clarify the task, and after completing clarification of the task, indicate a related application control proxy 102 to update or supplement the subtask based on a clarification result and continue to execute the subtask until the subtask is successfully executed.

In some embodiments, in a process in which the system proxy 101 performs the one or more rounds of interaction with the user to perform task clarification, the system proxy 101 may further interact with the user based on a task clarification request of the application control proxy 102 to obtain information input by the user, and analyze the information input by the user to obtain the clarification result. For example, the system proxy 101 may perform analysis based on the information that is input by the user in the one or more rounds of interaction and that is for clarifying the question, to obtain the clarification result.

In some embodiments, in the process in which the system proxy 101 performs the one or more rounds of interaction with the user to perform task clarification, the system proxy 101 may further indicate, based on the information input by the user, the application control proxy 102 to execute a clarification task, and then obtain the clarification result based on an execution result of the clarification task. For example, the system proxy 101 may obtain the clarification result according to a clarification instruction of the user in the one or more rounds of interaction by using processes corresponding to the clarification instruction, for example, clarification task planning and clarification task distribution.

The plurality of application control proxies 102 shown in FIG. 1 are configured to execute the specific subtasks based on the indication of the system proxy 101.

In embodiments of this application, the application control proxy may include but is not limited to a control proxy of any of the following applications: call, instant messaging, video, audio, shopping, news, information, finance, wealth management, weather, search, navigation, Email, clock, notes, calendar, map, office, artificial intelligence, and the like. This is not limited.

In some embodiments, in a process in which the application control proxy 102 executes the specific subtask, if the user needs to clarify some problems about the task or supplement some details about the task, the application control proxy 102 may further request the system proxy 101 to interact with the user to clarify the task, and after completing clarification of the task, update or supplement the subtask based on a clarification result and continue to execute the subtask until the subtask is successfully executed.

In other words, based on the multi-layer proxy architecture provided in embodiments of this application, the system proxy 101 may perform the one or more rounds of interaction with the user based on a status of executing the subtask by the application control proxy 102, until the subtask of each application control proxy 102 can be clearly, accurately, and reliably executed. Therefore, in the architecture, an operation intention of the user can be accurately determined according to the user instruction and the first memory information, to accurately determine the corresponding task. In addition, task splitting can be flexibly performed, and the subtasks obtained through splitting can be distributed to the application control proxies 102, to support reliable execution of each subtask; and the one or more rounds of interaction with the user can be flexibly performed based on a specific execution status of the subtask, to clarify some problems about the task and/or supplement some details about the task. This enables each subtask to be executed clearly, accurately, reliably, and in a timely manner. Finally, this ensures that the task is executed accurately, reliably, and in a timely manner. On the premise of simplifying a user operation, user instructions in different scenarios, including a user instruction in a simple scenario and a user instruction in a complex scenario, are intelligently responded to. Especially in complex scenarios such as a scenario involving a plurality of cross-application invocations, a scenario involving a complex inference process, and a scenario in which a problem needs to be clarified, a related task can be completed accurately, reliably, and in a timely manner. This improves user experience.

In some embodiments, the multi-layer proxy architecture shown in FIG. 1 further includes a memory module 103, configured to maintain memory information (such as the first memory information and second memory information) and system context information. The architecture shown in FIG. 1 is merely used as an example. In actual application, the system proxy 101 may include a module configured to maintain the first memory information, and each application control proxy 102 may include a module configured to maintain the second memory information of the application control proxy 102. This is not limited. The second memory information of the application control proxy 102 includes a historical record of executing a historical task by the application control proxy 102. For example, the second memory information of the application control proxy 102 includes session context of executing the historical task by the application control proxy 102. This is not limited.

For example, the multi-layer proxy architecture in embodiments of this application is a multi-agent (agent) architecture based on the language model such as the LLM or the MLLM. The agent uses the language model such as the LLM or the MLLM as a core computing engine of the agent, and includes a system agent (agent) and a domain agent (agent). The system agent (agent) is configured to perform user instruction analysis, task identification, task planning, task distribution, task clarification, and the like. The domain agent (agent) is configured to execute a specific subtask.

It should be noted that, in the multi-agent (agent) architecture, there may be a plurality of domain agents (agent), which are responsible for executing different types of subtasks.

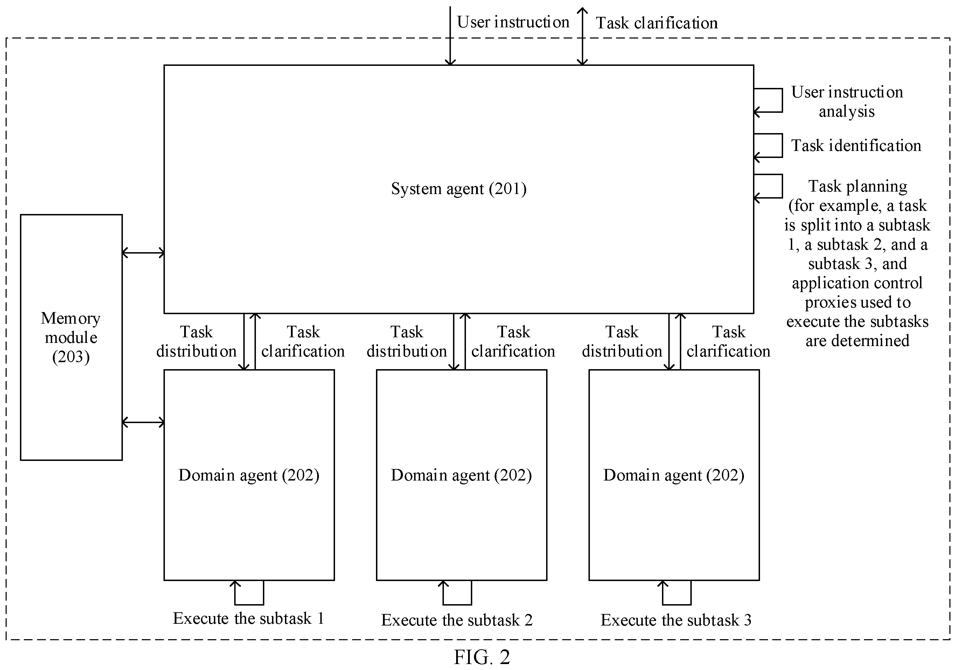

In an example, FIG. 2 is a diagram of a multi-layer agent (agent) architecture according to an embodiment of this application. As shown in FIG. 2, the multi-layer agent (agent) architecture may include a system agent (also referred to as a system agent) 201, a plurality of domain agents (also referred to as domain agents) 202 (three domain agents 202 included in FIG. 2 are used as an example), and a memory module 203. For descriptions of the system agent 201, refer to the foregoing descriptions of the system proxy 101. For descriptions of the domain agent 202, refer to the foregoing descriptions of the application control proxy 102. For descriptions of the memory module 203, refer to the foregoing descriptions of the memory module 103. Details are not described herein again.

In some embodiments, the task execution method provided in embodiments of this application may be applied to a device-cloud interaction architecture.

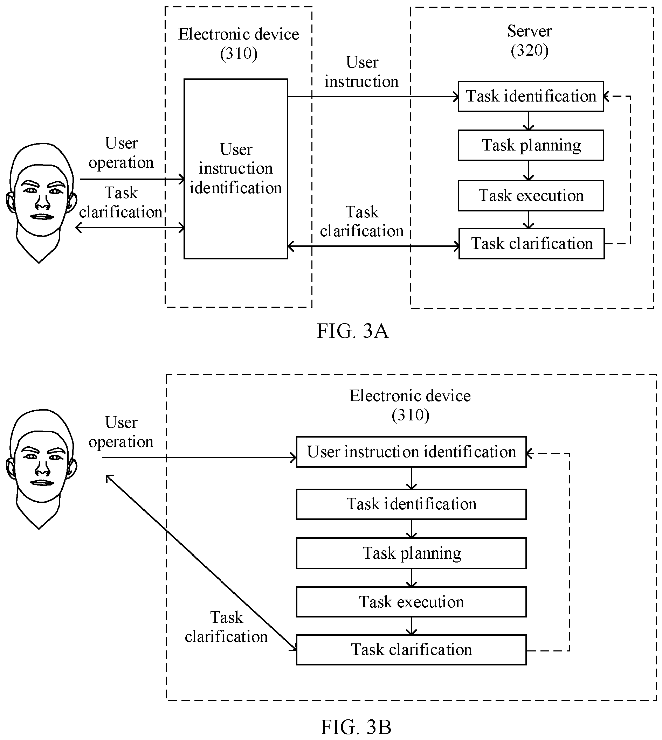

For example, the method may be applied to an architecture including an electronic device 310 and a server 320 (for example, a cloud server) shown in FIG. 3A. The electronic device 310 shown in FIG. 3A is configured to be responsible for interaction with a user, identify a user instruction based on an operation of the user, and send the user instruction to the server 320. The server 320 shown in FIG. 3A is configured to perform fusion analysis and inference according to the user instruction and first memory information to identify a task, and perform subsequent task planning, task execution, task clarification, and the like. The first memory information includes a historical record of executing a historical task related to the user instruction.

Optionally, after the server 320 and the electronic device 310 shown in FIG. 3A complete execution of the task, the electronic device 310 may further output a response result for the user instruction to the user, including but not limited to interface display, a result reminder, and the like.

Optionally, the server 320 shown in FIG. 3A is further configured to: when some problems about the task need to be clarified or some details about the task need to be supplemented, indicate the electronic device 310 to perform one or more rounds of interaction with the user to clarify the task, and after completing clarification of the task, update or supplement the user instruction based on a clarification result and continue to perform task identification, task planning, task execution, and the like, or after completing clarification of the task, update or supplement a subtask based on a clarification result and continue to execute the subtask. Correspondingly, the electronic device 310 shown in FIG. 3A is further configured to interact with the user again based on an indication of the server 320 to clarify the task, and send a clarification result to the server 320 until the subtask is successfully executed.

In some embodiments, the task execution method provided in embodiments of this application may be applied to a single-device architecture.

For example, the method may be applied to an electronic device 310 shown in FIG. 3B. The electronic device 310 is specifically configured to: interact with a user, and perform, based on user operations, user instruction identification, task identification, task planning, task execution, task clarification, and the like.

Optionally, after the electronic device 310 shown in FIG. 3B completes execution of a task, the electronic device 310 may further output a response result for a user instruction to the user, including but not limited to interface display, a result reminder, and the like.

Optionally, the electronic device 310 shown in FIG. 3B is further configured to: when some problems about the task need to be clarified or some details about the task need to be supplemented, perform one or more rounds of interaction with the user to clarify the task, and after completing clarification of the task, update or supplement the user instruction based on a clarification result and continue to perform task identification, task planning, task execution, and the like, or after completing clarification of the task, update or supplement a subtask based on a clarification result and continue to execute the subtask until the subtask is successfully executed.

A specific architecture to which the task execution method provided in embodiments of this application is applied is not specifically limited, and may be determined based on a specific device type, device function, device computing capability, application scenario, and the like.

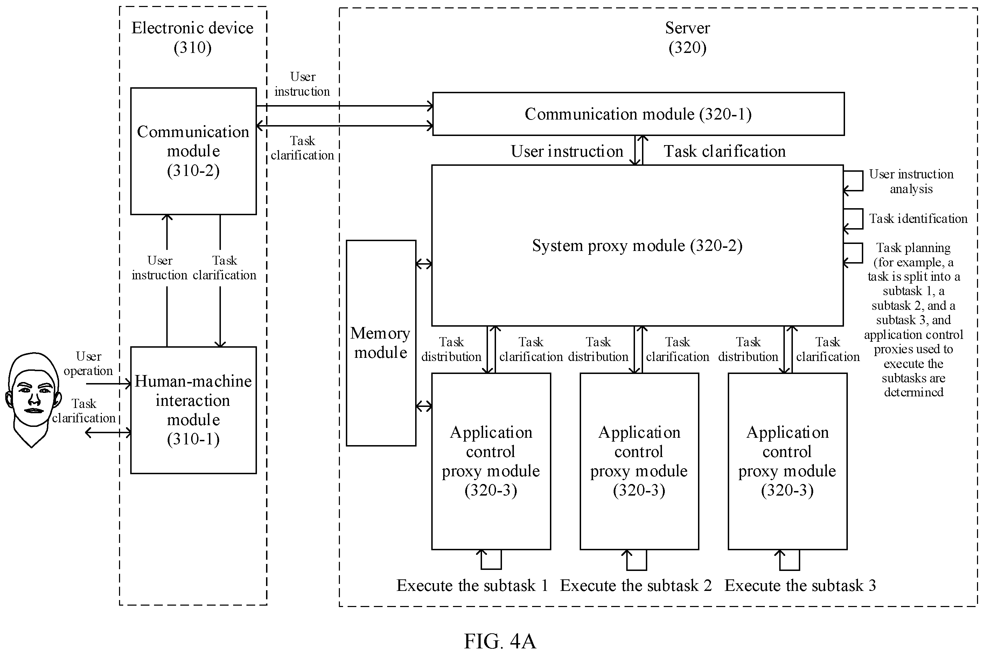

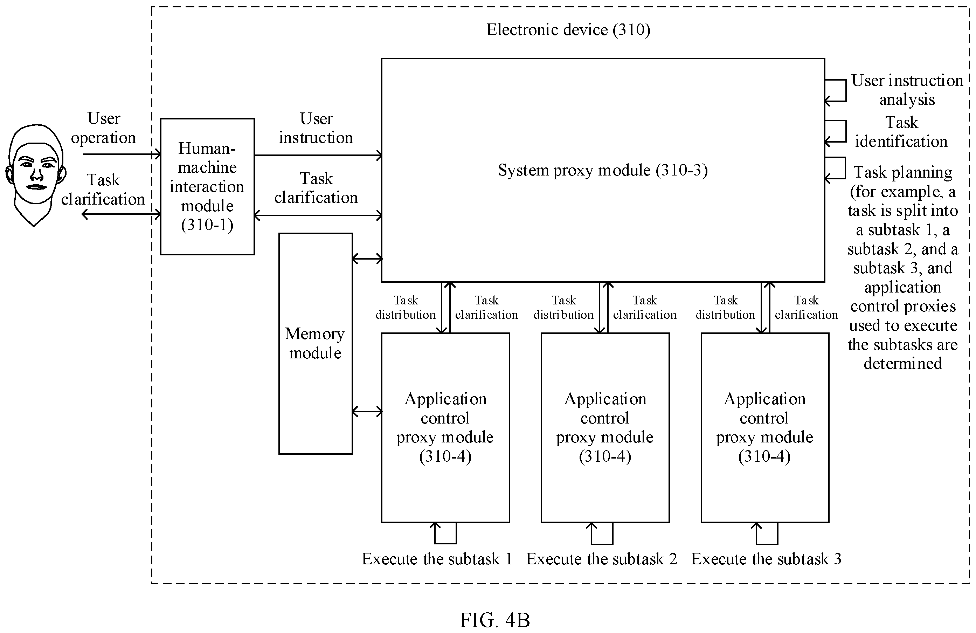

In an example, FIG. 4A and FIG. 4B are a diagram of structures of two system architectures according to an embodiment of this application by using the architectures shown in FIG. 3A and FIG. 3B as examples.

FIG. 4A is a diagram of a structure of a device-cloud synergy architecture. As shown in FIG. 4A, an electronic device 310 may include a human-machine interaction module 310-1 and a communication module 310-2; and a server 320 may include a communication module 320-1, a system proxy module 320-2, and a plurality of application control proxy modules 320-3 (three application control proxy modules 320-3 included in FIG. 4A and FIG. 4B are used as an example).

The human-machine interaction module 310-1 of the electronic device 310 shown in FIG. 4A is configured to: interact with a user, for example, a user operation like receiving content input by the user, receiving a touch operation of the user, or receiving a voice indication of the user; and identify a user instruction based on the user operation. A specific manner of interaction between the user and the electronic device 310 is not limited in embodiments of this application.

The communication module 310-2 of the electronic device 310 shown in FIG. 4A is configured to send the identified user instruction to the server 320. In some embodiments, the communication module 310-2 of the electronic device 310 is further configured to: perform one or more rounds of interaction with the server 320 to clarify a task, and send a clarification result to the server 320 to clarify some problems about the task and/or supplement some details about the task.

In some embodiments, the communication module 310-2 of the electronic device 310 is further configured to send system context obtained by a smart assistant to a system proxy. The system context of the smart assistant may include but is not limited to: information (such as a device identifier, a device name, and a login user name) about the electronic device, a running application A (for example, a foreground application or a background application), and location information (for example, location coordinates collected by a global positioning system (global position system, GPS)). The system context sent by the smart assistant is used for reference when the system proxy determines a task corresponding to a user instruction.

The communication module 320-1 of the server 320 shown in FIG. 4A is configured to receive the user instruction from the electronic device 310. In some embodiments, the communication module 320-1 of the server 320 is further configured to: perform one or more rounds of interaction with the electronic device 310 to clarify a task, to clarify some problems about the task and/or supplement some details about the task.

The system proxy module 320-2 of the server 320 shown in FIG. 4A is configured to be responsible for analyzing the user instruction to perform task identification, task planning, and task distribution. In some embodiments, when the system proxy module 320-2 or the application control proxy module 320-3 of the server 320 needs to clarify some problems about the task or supplement some details about the task, the system proxy module 320-2 of the server 320 is further configured to trigger the one or more rounds of interaction with the user via the electronic device 310 to clarify the task.

The plurality of application control proxy modules 320-3 of the server 320 shown in FIG. 4A are configured to execute respective subtasks based on an indication of the system proxy module 320-2 of the server 320. In some embodiments, when some problems about the task need to be clarified or some details about the task need to be supplemented, the plurality of application control proxy modules 320-3 of the server 320 are further configured to request the system proxy module 320-2 of the server 320 to clarify the task.

FIG. 4B is a diagram of a structure of a single-device architecture. As shown in FIG. 4B, an electronic device 310 may include a human-machine interaction module 310-1, a system proxy module 310-3, and application control proxy modules 310-4.

The human-machine interaction module 310-1 of the electronic device 310 shown in FIG. 4B is configured to: interact with a user, for example, a user operation like receiving content input by the user, receiving a touch operation of the user, or receiving a voice indication of the user; and identify a user instruction based on the user operation. A specific manner of interaction between the user and the electronic device 310 is not limited in embodiments of this application.

The system proxy module 310-3 of the electronic device 310 shown in FIG. 4B is configured to be responsible for analyzing the user instruction to perform task identification, task planning, and task distribution.

The plurality of application control proxy modules 310-4 of the electronic device 310 shown in FIG. 4B are configured to execute respective subtasks based on an indication of the system proxy module 310-3 of the electronic device 310.

In some embodiments, when some problems about a task need to be clarified or some details about a task need to be supplemented, the application control proxy module 310-4 of the electronic device 310 is further configured to request the system proxy module 310-3 of the electronic device 310 to clarify the task, so as to clarify some problems about the task and/or supplement some details about the task. Correspondingly, the system proxy module 310-3 of the electronic device 310 is further configured to trigger one or more rounds of interaction with the user to clarify the task.

It should be noted that FIG. 4A and FIG. 4B are merely used as examples of structures of the two system architectures used to execute the task according to the user instruction. A specific architecture and a specific functional module disposed in the electronic device or the server are not limited in embodiments of this application. For example, a plurality of modules in FIG. 4A or FIG. 4B may be integrated together, or a function of one module may be completed through division of a plurality of submodules, which is determined based on a specific situation.

The electronic device in embodiments of this application may include but is not limited to any image display electronic device. For example, the electronic device may include but is not limited to a smartphone, a netbook, a tablet computer, a smart drawing board, a handwriting tablet, a smart watch, a smart band, a phone watch, smart glasses, a smart camera, a palmtop computer, a vehicle-mounted computer, a personal computer (personal computer, PC), a personal digital assistant (personal digital assistant, PDA), a portable multimedia player (portable multimedia player, PMP), an augmented reality (augmented reality, AR)/(virtual reality, VR) device, a smart television, a projection device, a motion-sensing game console in a human-machine interaction scenario, and the like. Alternatively, the electronic device may be an image display electronic device of another type or structure. This is not limited in this application.

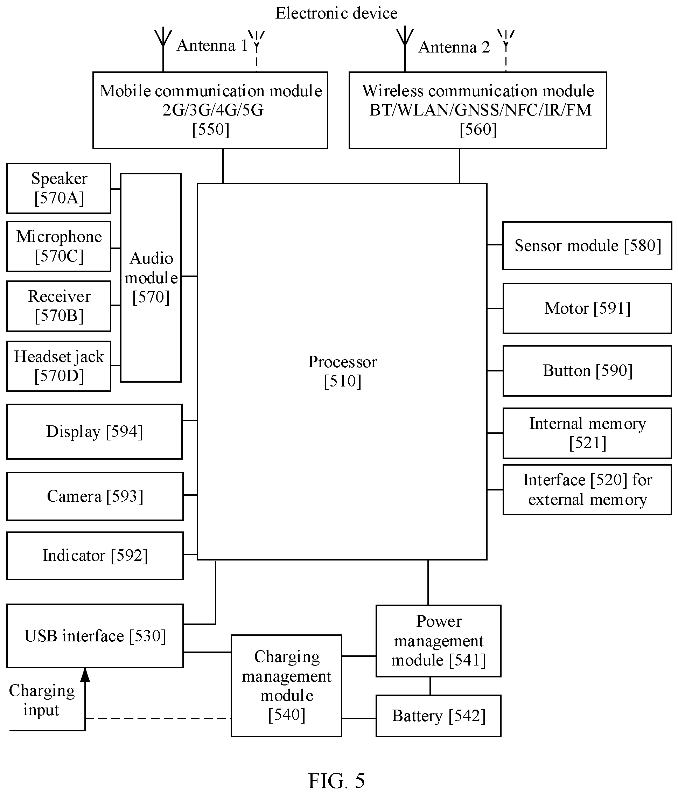

In an example, FIG. 5 is a diagram of a hardware structure of an electronic device according to an embodiment of this application.

As shown in FIG. 5, the electronic device may include a processor 510, memories (including an interface 520 for external memory and an internal memory 521), a universal serial bus (universal serial bus, USB) interface 530, a charging management module 540, a power management module 541, a battery 542, an antenna 1, an antenna 2, a mobile communication module 550, a wireless communication module 560, an audio module 570, a speaker 570A, a receiver 570B, a microphone 570C, a headset jack 570D, a sensor module 580, a button 590, a motor 591, an indicator 592, a camera 593, a display 594, and the like.

The sensor module 580 may include but is not limited to one or more of the following: a touch sensor, a pressure sensor, a temperature sensor, a gyroscope sensor, a barometric pressure sensor, a magnetic sensor, an acceleration sensor, a distance sensor, an optical proximity sensor, a fingerprint sensor, an ambient light sensor, a bone conduction sensor, and the like.

The processor 510 may include one or more processing units. For example, the processor 510 may include an application processor (application processor, AP), a modem, a graphics processing unit (graphics processing unit, GPU), an image signal processor (image signal processor, ISP), a flight controller, a video codec, a digital signal processor (digital signal processor, DSP), a baseband processor, and/or a neural-network processing unit (neural-network processing unit, NPU). Different processing units may be independent components, or may be integrated into one or more processors.

A memory may be further disposed in the processor 510, and is configured to store instructions and data. In some embodiments, the memory in the processor 510 is a cache. The memory may store instructions or data that has been recently used or cyclically used by the processor 510. If the processor 510 needs to use the instructions or the data again, the processor may directly invoke the instructions or the data from the memory. This avoids repeated access and reduces a waiting time of the processor 510, thereby improving system efficiency.

In some embodiments of this application, the processor 510 may send, through an interface like a DSI interface, an application interface, a memory image, and the like to the display 594 for display.

A wireless communication function of the electronic device may be implemented via the antenna 1, the antenna 2, the mobile communication module 550, the wireless communication module 560, the modem processor, the baseband processor, and the like.

In some embodiments of this application, the electronic device may communicate with another device via the antenna 1, the antenna 2, the mobile communication module 550, the wireless communication module 560, the modem processor, the baseband processor, and the like, for example, send a user instruction, information used to clarify a problem, a clarification instruction, a clarification result, and the like to a server; and receive an invocation indication of an execution engine, a tool, or an interface from the server.

The electronic device implements a display function via the GPU, the display 594, the AP, and the like. The GPU is a microprocessor for image processing, and is connected to the display 594 and the AP. The GPU is configured to perform mathematical and geometric calculation, and is configured to draw, render, or synthesize graphics. The processor 510 may include one or more GPUs that execute program instructions to generate or change display information.

In some embodiments of this application, the electronic device may implement related processing of the application interface and/or the memory image via the AP, the GPU, and the like, and display the application interface and/or the memory image via the display 594.

The electronic device may implement a photographing function via the ISP, the camera 593, the video codec, the GPU, the display 594, the AP, and the like.

The interface 520 for external memory may be configured to connect to an external memory card, for example, a micro SD card, to extend a storage capability of the electronic device. The external storage card communicates with the processor 510 through the interface 520 for external memory, to implement a data storage function.

The internal memory 521 may be configured to store computer-executable program code. For example, a computer program may include an operating system program and an application. The executable program code includes instructions. The processor 510 runs the instructions stored in the internal memory 521, to perform various functional applications of the electronic device and data processing. The internal memory 521 may include a program storage area and a data storage area. The program storage area may store an operating system, an application required by at least one function, and the like. The data storage area may store data created during use of the electronic device, and the like. In addition, the internal memory 521 may include a high-speed random access memory, or may include a nonvolatile memory, for example, at least one magnetic disk storage device, a flash memory, or a universal flash storage (universal flash storage, UFS). The processor 510 runs the instructions stored in the internal memory 521 and/or instructions stored in the memory disposed in the processor, to perform various function applications of the electronic device and data processing.

The electronic device may implement an audio function, for example, music playing and recording, via the audio module 570, the speaker 570A, the receiver 570B, the microphone 570C, the AP, and the like.

For descriptions of the charging management module 540, the power management module 541, the battery 542, the motor 591, the indicator 592, and the like shown in FIG. 5, refer to those in a conventional technology. Details are not described herein again.

It may be understood that the structure shown in FIG. 5 in this application does not constitute a specific limitation on the electronic device. In some other embodiments of this application, the electronic device may include more or fewer components than those shown in the figure, or combine some components, or split some components, or have different component arrangements. The components shown in the figure may be implemented by hardware, software, or a combination of software and hardware.

The following describes in detail the task execution method provided in embodiments of this application.

The multi-layer proxy architecture provided in embodiments of this application can respond to user instructions in various scenarios accurately, reliably, and in a timely manner, including user instructions in various complex scenarios. The proxy architecture including the system proxy and the application control proxy is used an example. In this case, the multi-layer proxy architecture may execute tasks in the following scenario 1 to scenario 3:

### Scenario 1: Single-task scenario

The single-task scenario is, for example, a scenario in which after a system proxy determines, according to a user instruction and a historical record (that is, first memory information) that is recorded by the system proxy and that is about execution of a related historical task, a task corresponding to the user instruction, task splitting is not required, and a response to the user instruction can be completed after the task is executed once. For this case, after obtaining the user instruction corresponding to a user operation, and determining, according to the user instruction and the first memory information, the task corresponding to the user instruction, the system proxy may determine an application control proxy used to execute the task, and indicate the application control proxy to execute the corresponding task, so as to respond to the user instruction.

For example, the single-task scenario is a task execution (Action) instruction scenario.

For example, the user instruction is "set an alarm for 8 o'clock". The system proxy determines, according to the user instruction and the first memory information, that the task corresponding to the user instruction is "set an alarm for 8 o'clock tomorrow in a clock application". For example, the system proxy may instruct, according to the following instruction 1, a clock control proxy to execute the task "set an alarm for 8 o'clock tomorrow in a clock application":
instruction 1: CreateAlarm(time="8 o'clock tomorrow"), LastAction: True.

In the instruction 1, "CreateAlarm(time="8 o'clock tomorrow")" instructs to set the alarm for 8 o'clock tomorrow, and "LastAction: True" indicates that the response to the user instruction can be ended after this task is executed successfully.

Alternatively, for example, the user instruction is "buy a serving of celery-stuffed dumplings and deliver them to an address C". The system proxy determines, according to the user instruction and the first memory information (for example, a frequent order record at a store B in an application A by the user), that the task corresponding to the user instruction is "buy a serving of celery-stuffed dumplings at the store B in the application A and deliver them to the address C". The response to the user instruction can be ended after the task is executed.

### Scenario 2: Multi-task scenario

In an example, the multi-task scenario includes a multi-task scenario of one-time planning and a multi-task scenario of multiple-time planning.

The multi-task scenario of one-time planning is, for example, a scenario in which after determining, according to a user instruction and first memory information, a task corresponding to the user instruction, a system proxy splits the task into a plurality of subtasks and distributes the plurality of subtasks to a corresponding application control proxy. For this case, after obtaining the user instruction corresponding to a user operation, the system proxy may determine, according to the user instruction and the first memory information, the task corresponding to the user instruction, split the task corresponding to the user instruction into the plurality of subtasks, and then distribute the subtasks to the determined application control proxy for execution, to respond to the user instruction. When the application control proxy executes the respective subtask, the application control proxy may automatically perform task switching based on an indication of the system proxy.

For example, the multi-task scenario of one-time planning is, for example, a ReAct (ReAct) instruction scenario.

For example, the user instruction is "query a phone number of Zhang San, and then send the phone number to Li Si via an instant messaging application X". The system proxy determines, according to the user instruction and the first memory information, that the task corresponding to the user instruction is "search a contacts application for the phone number of Zhang San, and then send the phone number to the contact Li Si via the instant messaging application X". Then, the system proxy splits the task into a first subtask and a second subtask through task splitting. The first subtask is "search the contacts application for the phone number of Zhang San", and the second subtask is "send the phone number of Zhang San to the contact Li Si via the instant messaging application X".

For example, a process in which the system proxy performs task planning may be as follows:
plugins [search the contacts application for the phone number of Zhang San, and send the phone number of Zhang San to the contact Li Si via the instant messaging application X].

For example, the system proxy may instruct, according to the following instruction 2, a contacts control proxy to execute the first subtask "search the contacts application for the phone number of Zhang San", and instruct, according to the following instruction 3, the contacts control proxy to execute the second subtask "send the phone number of Zhang San to the contact Li Si via the instant messaging application X":
instruction 2: CheckPhone(contract="Zhang San"), LastAction: False;
instruction 3: SendMail(App="instant messaging application X", Receiver="Li Si"), LastAction: True.

In the instruction 2, "CheckPhone(contract="Zhang San")" instructs to search the contacts application for the phone number of Zhang San. "SendMail(App="instant messaging application X", Receiver="Li Si") instructs to send the phone number of Zhang San to the contact Li Si via the instant messaging application X. "LastAction: False" indicates that another task needs to be further executed after this task is successfully executed. "LastAction: True" indicates that a response to the user instruction can be ended after this task is successfully executed.

Alternatively, for example, the user instruction is "buy another serving of dumplings". The system proxy determines, according to the user instruction and the first memory information, that the task corresponding to the user instruction is "buy a serving of celery-stuffed dumplings at a store B in an application A and deliver them to an address C". Then, the system proxy splits the task into a first subtask, a second subtask, and a third subtask through task splitting. The first subtask is "open the application A", the second subtask is "search for the store B in the application A", and the third subtask is "order a serving of celery-stuffed dumplings at the store B and deliver them to the address C".

It should be noted that the foregoing several scenarios and task examples are merely used as examples. In actual application, the user instruction, task planning, and specific execution-related details of each subtask are not limited, and may be determined based on a specific situation.

The multi-task scenario of multiple-time planning is, for example, a scenario in which after determining, according to a user instruction and first memory information, a task corresponding to the user instruction, a system proxy finds that execution of the task cannot successfully respond to the user instruction or execution of the task cannot accurately respond to the user instruction. In this case, the system proxy re-plans a task based on the task, and responds to the user instruction by executing a first subtask and a second subtask.

For example, the user instruction is "send a phone number of Zhang San to Li Si via a communication application X". The system proxy determines, according to the user instruction and the first memory information, that the task corresponding to the user instruction is "send the phone number of Zhang San to Li Si via the communication application X". However, because the system proxy does not store the phone number of Zhang San, the system proxy further performs task planning based on the task through analysis, inference, and the like, to obtain the first subtask and the second subtask. The first subtask is "obtain the phone number of Zhang San", and the second subtask is "send the phone number of Zhang San to Li Si via the communication application X".

For example, a process in which the system proxy performs task planning may be as follows:
plugins [send the phone number of Zhang San to Li Si via the communication application X]->plan (subtask 1: obtain the phone number of Zhang San; subtask 2: send the obtained phone number to Li Si via the communication application X).

In the foregoing example, the "subtask 1: obtain the phone number of Zhang San" is the first subtask described above, and the "subtask 2: send the obtained phone number to Li Si via the communication application X" is the second subtask described above.

For example, the system proxy may instruct, according to the following instruction 4, a contacts control proxy to execute the first subtask "obtain the phone number of Zhang San", and instruct, according to the following instruction 5, the contacts control proxy to execute the second subtask "send the phone number of Zhang San to the contact Li Si via the instant messaging application X":
instruction 4: CheckPhone(contract="Zhang San"), LastAction: False; and
instruction 5: SendMail(App="instant messaging application X", Receiver="Li Si"), LastAction: True.

In the instruction 4, "CheckPhone(contract="Zhang San")" instructs to obtain the phone number of Zhang San, and "LastAction: False" indicates that another task needs to be further executed after this task is successfully executed. In the instruction 5, "SendMail(App="instant messaging application X", Receiver="Li Si")" indicates that the phone number of Zhang San is sent to the contact Li Si via the instant messaging application X, and "LastAction: True" indicates that the response to the user instruction can be ended after this task is successfully executed.

Alternatively, for example, the user instruction is "buy another serving of dumplings". The system proxy determines, according to the user instruction and the first memory information, that the task corresponding to the user instruction is "buy a serving of dumplings at a store B in an application A". However, because the system proxy does not store a preferred dumpling filling or delivery address of a user, the system proxy further performs task planning based on the task through analysis, inference, and the like, to obtain the first subtask and the second subtask. The first subtask is "obtain order information of the user at the store B in the application A", and the second subtask is "buy a serving of dumplings at the store B in the application A based on the obtained order information".

### Scenario 3: Task clarification scenario.

In an example, the task clarification scenario is, for example, a scenario in which a system proxy needs to clarify some problems about a task or supplement some details about a task when determining the task corresponding to a user instruction. In this scenario, the system proxy may trigger task clarification (clarify) to clarify some problems about the task or supplement some details about the task through one or more rounds of interaction with a user.

For example, the user instruction is "I want to buy a ticket to Beijing". When the system proxy determines the task corresponding to the user instruction, because the system proxy does not determine whether the user wants to buy a flight ticket, a train ticket, or another type of ticket, the system proxy may trigger task clarification (clarify), to determine, through one or more rounds of interaction with the user, a specific type of the ticket that the user wants to buy.

Alternatively, for example, the user instruction is "I want to buy a flight ticket to Beijing". When the system proxy determines the task corresponding to the user instruction, because the system proxy does not determine a specific date of the flight ticket that the user wants to buy, the system proxy may trigger task clarification (clarify), to determine, through one or more rounds of interaction with the user, the specific date of the ticket that the user wants to buy.

In an example, the task clarification scenario is, for example, a scenario in which an application control proxy needs to clarify some problems about the task or supplement some details about the task in a process of executing the task. In this scenario, the application control proxy may request the system proxy to trigger task clarification (clarify), to clarify some problems about the task or supplement some details about the task through one or more rounds of interaction with the user. For example, the system proxy may perform the one or more rounds of interaction with the user by using a smart assistant, to clarify some problems about the task or supplement some details about the task.

For example, the user instruction is "buy another serving of dumplings". The system proxy determines, according to the user instruction and the first memory information, that the task corresponding to the user instruction is "buy a serving of dumplings at a store B in an application A". For example, a first subtask, a second subtask, and a third subtask that are obtained through splitting are respectively "open the application A", "search for the store B in the application A", and "order a serving of dumplings at the store B and deliver them to an address C". After an application A control proxy opens the application A and searches for and enters the store B in the application A, in a process of executing the third subtask "order a serving of dumplings at the store B and deliver them to an address C", because the application A control proxy does not determine a type of dumpling filling that the user wants to buy, the application A control proxy requests the system proxy to trigger task clarification (clarify), to determine, through one or more rounds of interaction with the user, the type of dumpling filling that the user wants to buy.

Alternatively, for example, the user instruction is "set an alarm for 8 o'clock". The system proxy determines, according to the user instruction and the first memory information, that the task corresponding to the user instruction is "set an alarm for 8 o'clock in a clock application". When an application control proxy of the clock application opens the clock application and is about to set the alarm, because the application control proxy of the clock application does not determine whether the user needs to set an 8:00 AM or 8:00 PM alarm, the application control proxy of the clock application requests the system proxy to trigger task clarification (clarify), to determine, through one or more rounds of interaction with the user, whether the user sets the 8:00 AM or 8:00 PM alarm.

In a possible implementation, in a process of performing the one or more rounds of interaction with the user, the system proxy may perform, by using the smart assistant, analysis based on information that is input by the user in the one or more rounds of interaction and that is used to clarify a problem, to obtain a clarification result.

For example, in a process in which the application A control proxy executes the third subtask "order a serving of dumplings at the store B and deliver them to an address C", because the application A control proxy does not determine the type of dumpling filling that the user wants to buy, the application A control proxy requests the system proxy to trigger task clarification (clarify), to determine, through the one or more rounds of interaction with the user, the type of dumpling filling that the user wants to buy. For example, the system proxy may use the smart assistant to ask the user "What kind of dumpling filling would you like?". In response to a user's answer "celery filling", the system proxy may determine that the user wants to buy celery-stuffed dumplings, and send the clarification result to the application A control proxy. After receiving the clarification result, the application A control proxy updates or supplements the third subtask to "order a serving of celery-stuffed dumplings at the store B and deliver them to the address C", and continues to execute the third subtask.

In a possible implementation, in the process of performing the one or more rounds of interaction with the user, the system proxy may obtain, by using the smart assistant, the clarification result according to a clarification instruction of the user in the one or more rounds of interaction by using processes corresponding to the clarification instruction, for example, clarification task planning and clarification task distribution.

For example, in a process in which the application A control proxy executes the third subtask "order a serving of dumplings at the store B and deliver them to an address C", because the application A control proxy does not determine the type of dumpling filling that the user wants to buy, the application A control proxy requests the system proxy to trigger task clarification (clarify), to determine, through the one or more rounds of interaction with the user, the type of dumpling filling that the user wants to buy. For example, the system proxy may use the smart assistant to ask the user "What kind of dumpling filling would you like?". It is assumed that the user indicates "call Dad to ask". In this case, the system proxy may determine, according to the clarification instruction, that the clarification task is "call Dad to ask what dumpling filling he prefers", split the clarification task into a first clarification subtask "obtain a phone number of Dad" and a second clarification subtask "call Dad to ask what dumpling filling he prefers", and distribute the clarification subtasks to a corresponding application control proxy. It is assumed that the system proxy finally determines, by executing the first clarification subtask and the second clarification subtask, that the user wants to buy the celery-stuffed dumplings, and the system proxy may determine that the user wants to buy the celery-stuffed dumplings, and send the clarification result to the application A control proxy. After receiving the clarification result, the application A control proxy updates or supplements the third subtask to "order a serving of celery-stuffed dumplings at the store B and deliver them to the address C", and continues to execute the third subtask.

In some embodiments, the scenario 3 may overlap with the scenario 1 or the scenario 2. For example, in the single-task scenario (that is, the scenario 1), the task clarification scenario (that is, the scenario 3) may also be involved; or in the multi-task scenario (that is, the scenario 2), the task clarification scenario (that is, the scenario 3) may also be involved.

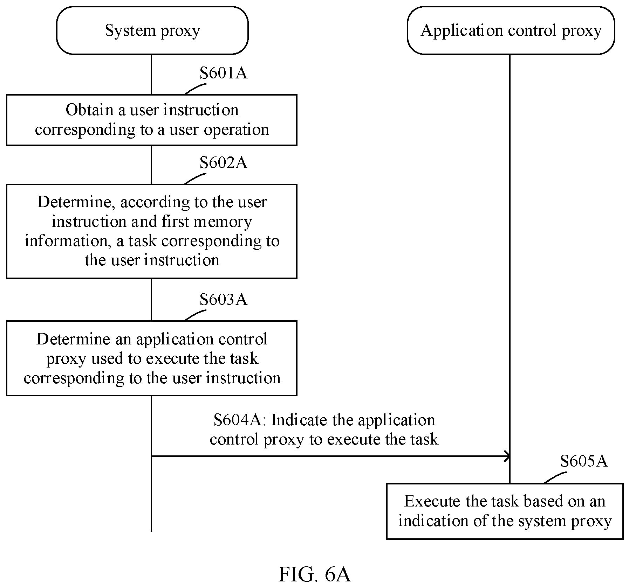

In an example, FIG. 6A is an interaction diagram of a task execution process according to an embodiment of this application by using a single-task scenario as an example. As shown in FIG. 6A, a smart assistant may execute a task for a user instruction by performing S601A to S605A based on a multi-layer proxy architecture including a system proxy and at least one application control proxy. A related function of the smart assistant may be completed by an electronic device, or may be completed by a server, or may be completed by an electronic device and a server through collaboration and division of labor. This is not specifically limited.

S601A: The system proxy obtains the user instruction corresponding to a user operation.

In an example, the user operation is an operation performed by a user on the smart assistant in the electronic device. For example, the smart assistant may include but is not limited to a voice assistant.

The user operation may include but is not limited to at least one of the following: a voice indication operation, a gesture operation, a body language operation, a touch operation, an information input operation (for example, a text input operation), and the like. For example, the smart assistant is the voice assistant. In this case, the user operation may be a voice indication of the user in the voice assistant. A specific operation form of the user operation is not limited in embodiments of this application.

In an example, the smart assistant is deployed on the electronic device.

In a possible implementation, after the electronic device receives a user operation, for example, an operation performed by the user on the smart assistant in the electronic device, the electronic device may first determine an input event corresponding to the user operation, and then perform analysis, inference, and the like based on the input event to identify a user instruction corresponding to the input event. For example, after the electronic device receives the user operation, the electronic device may first convert the user operation into the specific input event, and then distribute the input event to a smart assistant window corresponding to the electronic device. The smart assistant may perform analysis, inference, and the like based on the input event to identify the user instruction corresponding to the input event.

In an example, the user operation is to input a voice instruction "help me order another serving of dumplings" in the smart assistant. The electronic device may first convert the voice instruction into a specific input event, and then distribute the input event to a smart assistant window corresponding to the electronic device. The voice assistant may perform analysis, inference, and the like based on the input event to identify that a user instruction corresponding to the input event is "buy another serving of dumplings".

In a possible implementation, after completing determining of the user instruction, the smart assistant may invoke the system proxy to perform subsequent S602A.

In an example, the system proxy is deployed on the electronic device. In this case, the smart assistant may invoke a related interface to send the determined user instruction to the system proxy.

In an example, the system proxy is deployed on the server. In this case, the smart assistant may send the determined user instruction to the system proxy via a communication connection to the server.

In some embodiments, in addition to sending the user instruction to the system proxy, the smart assistant may further send, to the system proxy, system context obtained by the smart assistant. The system context of the smart assistant may include but is not limited to: information (such as a device identifier, a device name, and a login user name) about the electronic device, a running application A (for example, a foreground application or a background application), and location information (for example, location coordinates collected by a GPS). The system context sent by the smart assistant is used for reference when the system proxy determines the task corresponding to the user instruction.

In some embodiments, the system proxy may further rewrite the user instruction with reference to a language model and a knowledge base, and determine a corresponding task according to a rewritten user instruction. For example, the system proxy may rewrite the user instruction by using processes such as system context loading, retrieval or loading of first memory information, named entity recognition, and hotword detection.

S602A: The system proxy determines, according to the user instruction and the first memory information, the task corresponding to the user instruction.

In a possible implementation, the system proxy may use the user instruction and the first memory information as input into the language model, and perform fusion analysis and inference on the user instruction and the first memory information by using the language model, to determine the task corresponding to the user instruction. For example, the language model may include but is not limited to at least one of the following: an LLM and an MLLM.

In an example, the first memory information includes a historical record of executing, by the system proxy, a historical task related to the task. For example, the first memory information includes a historical record of a historical task in a historical interaction process between the system proxy and the application control proxy, and the historical record includes a historical record of a historical task related to the task corresponding to the user instruction in the historical interaction process between the system proxy and the application control proxy. For example, the historical record may include but is not limited to at least one of the following: a response (response) of the application control proxy to the historical task, determining and rewriting performed by the system proxy in a process of executing the historical task, and an action performed by the system proxy in the process of executing the historical task and a result.

In an example, the system proxy and the application control proxy may interact with each other by following a specified communication specification.

For example, the communication specification specifies a specification of session context of each historical dialog shown in Table 1 when the system proxy interacts with the application control proxy.

**Table 1**

| Historical dialog | | Specification of session context |
|---|---|---|
| User instruction (for example, query) | | A system proxy needs to perform analysis, inference, determining, rewriting, and other operations on the user instruction, identify a task corresponding to the user instruction, and distribute the task to an application control proxy |
| System response (response) | | Needs to include task clarification and an execution result reply (for example, a text reply and/or a card reply) |
| Function plugin (Plugin) | Task execution (Action) | Distribution of the function plugin needs to include a function identifier (for example, functionName (params)) |
| | Task execution result (Action Result) | Function invocation execution result |
| Application control proxy (for example, domain agent) | Application control proxy (for example, domain agent) | When a task is distributed to the application control proxy, an identifier (for example, AgentName) of the application control proxy needs to be included |
| | Application control proxy state (AgentState) | The application control proxy state includes an application control proxy execution state, for example, any one of the following: task clarification (clarify), executing (continue), and task completion (finished). The system proxy is unaware of an intermediate action execution process of the application control proxy state |
| | Application control proxy response (Agent Response) | The application control proxy response includes a task execution result of the application control proxy, and the task execution result may be used for user result generation and/or signal transmission between application control proxies |

In some embodiments, as shown in Table 2, in addition to the specification of the session context of each historical dialog shown in Table 1, the communication specification followed between the system proxy and the application control proxy further specifies a specification of generating respective memory information by the system proxy and the application control proxy.

**Table 2**

| Historical dialog | Specification of session context |
|---|---|
| Memory (Memory) information record | Generates memory information including structured information, for example, including first memory information and/or second memory information, and at least one of the following: gender, age, preference, habit, hobby, and the like |

Based on the multi-layer proxy architecture provided in embodiments of this application, layers interact with each other by following a specified communication specification. In this way, analysis and inference costs of each layer can be reduced, and task execution efficiency, reliability, and accuracy can be ensured when the multi-layer proxy architecture is applied to various complex scenarios.

In an example, the user instruction is "buy another serving of dumplings", and the first memory information includes session context in which the system proxy and the application control proxy interact to execute a historical task "buy a serving of celery-stuffed dumplings at a store B in an application A and deliver them to an address C". The system proxy may perform fusion analysis and inference according to the user instruction and the first memory information, to determine that the task corresponding to the user instruction is "buy a serving of celery-stuffed dumplings at a store B in an application A and deliver them to an address C". It can be learned that, in this example, the user instruction "buy another serving of dumplings" does not indicate an application or a store in which the dumplings are to be bought, does not indicate a type of filling for the dumplings to be bought, and does not indicate a delivery address. The system proxy can intelligently determine a target application, a target store, a target dish, and the delivery address by performing fusion analysis and inference on the user instruction and the first memory information, and can identify the task corresponding to the user instruction accurately, reliably, and in a timely manner without requiring the user to input an excessively complex instruction.

In some embodiments, if the system proxy receives the system context, the system proxy may further refer to the system context when determining the task corresponding to the user instruction. For example, the system proxy may perform fusion analysis and inference on first prompt information by using the language model by using the prompt information determined according to the user instruction, the first memory information, and the system context as input into the language model, to determine the task corresponding to the user instruction.

S603A: The system proxy determines an application control proxy used to execute the task corresponding to the user instruction.

In a possible implementation, the system proxy may determine, based on an application related to the determined task corresponding to the user instruction, that an application control proxy corresponding to the application executes the task.

For example, the task corresponding to the user instruction is "set an alarm for 8 o'clock". In this case, the system proxy determines, based on the application A related to the task, that an application control proxy of a clock application executes the task.

S604A: The system proxy indicates the application control proxy to execute the task.

In an example, the system proxy may indicate, through an interface between the system proxy and the application control proxy, the application control proxy to execute the task.

S605A: The application control proxy executes the task based on an indication of the system proxy.

In a possible example, after receiving the indication from the system proxy, the application control proxy invokes a related execution engine, tool, or interface, to execute the corresponding task. For example, the task is an operation in an application. The application control proxy may invoke the execution engine, the tool, or the interface based on UI understanding, to perform related control on the application.

For example, the task corresponding to the user instruction is "set an alarm for 8 o'clock tomorrow". In this case, after receiving the indication from the system proxy, the application control proxy of the clock application may invoke the execution engine (for example, the smart assistant), the tool, the interface, or the like based on UI understanding, to start the clock and set the alarm for 8 o'clock tomorrow in the clock application.

In some embodiments, the application control proxy may execute the task based on the task corresponding to the user instruction and second memory information of the application control proxy. The second memory information includes a historical record of executing a historical task by the application control proxy, for example, includes a historical record of executing, by the application control proxy, a historical task related to the task corresponding to the user instruction. For example, in a process in which the application control proxy executes the task based on the indication of the system proxy, the application control proxy may further assist in supplementing the task based on the second memory information, and execute the task based on a supplemented task.

In some embodiments, in the process in which the application control proxy executes the task based on the indication of the system proxy, the application control proxy may further assist in supplementing the task based on the system context. Based on this, the application control proxy executes the task based on a supplemented subtask.

In an example, the application control proxy is deployed on the electronic device. In this case, the application control proxy may invoke the related execution engine, tool, interface, or the like of the electronic device to execute the corresponding task.

In an example, the application control proxy is deployed on the server. In this case, the application control proxy may invoke a communication connection between the server and the electronic device, to send an invocation indication of the execution engine, the tool, or the interface to the electronic device. Correspondingly, the electronic device invokes, based on the invocation indication of the application control proxy, the related execution engine, tool, interface, or the like to execute the corresponding task.

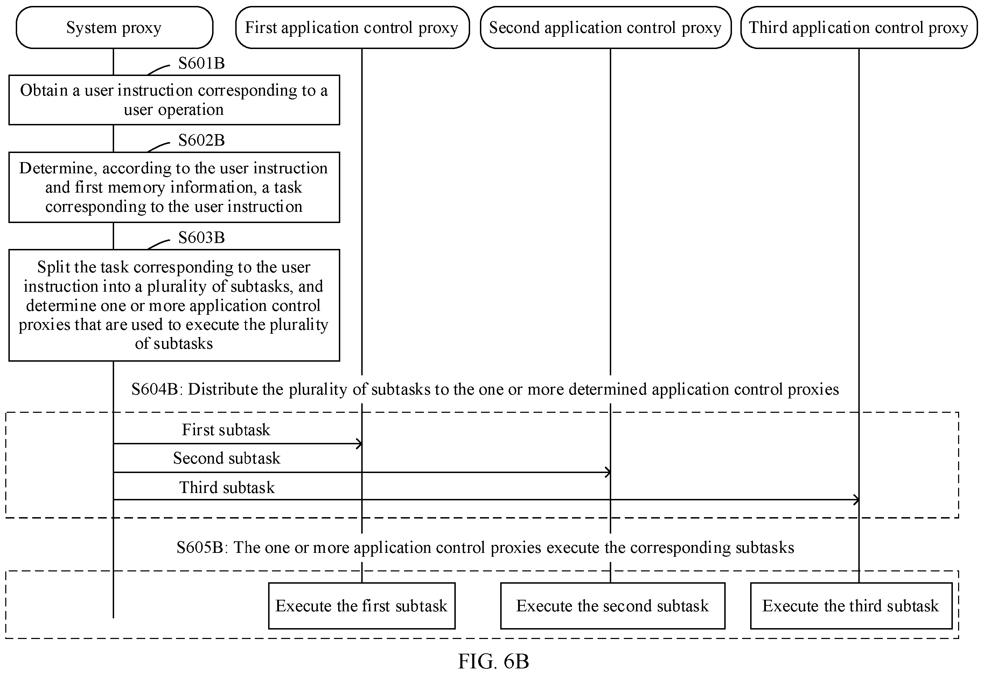

In an example, FIG. 6B is an interaction diagram of a task execution process according to an embodiment of this application by using a multi-task scenario as an example. As shown in FIG. 6B, a smart assistant may execute a task for a user instruction by performing S601B to S605B based on a multi-layer proxy architecture including a system proxy and at least one application control proxy (in FIG. 6B, a first application control proxy, a second application control proxy, and a third application control proxy are used as an example). A related function of the smart assistant may be completed by an electronic device, or may be completed by a server, or may be completed by an electronic device and a server through collaboration and division of labor. This is not specifically limited.

S601B: The system proxy obtains the user instruction corresponding to a user operation.

For specific descriptions of S601B, refer to the foregoing descriptions of S601A. Details are not described herein again.

S602B: The system proxy determines, according to the user instruction and first memory information, the task corresponding to the user instruction.

For specific descriptions of S602B, refer to the foregoing descriptions of S602A. Details are not described herein again.

S603B: The system proxy splits the task corresponding to the user instruction into a plurality of subtasks, and determines the one or more application control proxies that are used to execute the plurality of subtasks.

The system proxy may split the task corresponding to the user instruction into at least two subtasks. For example, the system proxy may split the task corresponding to the user instruction into a first subtask and a second subtask. For another example, the system proxy may split the task corresponding to the user instruction into a first subtask, a second subtask, and a third subtask.

In a possible implementation, the system proxy may select, from a plurality of application control proxies based on the subtasks obtained by splitting the task corresponding to the user instruction, the one or more application control proxies capable of executing the subtasks. Different subtasks may be executed by different application control proxies, or may be executed by a same application control proxy, which depends on specific subtask content. This is not limited.

In a possible example, the plurality of subtasks obtained by splitting, by the system proxy, the task corresponding to the user instruction may need to be sequentially executed in a specific execution sequence.

For example, the system proxy splits the task corresponding to the user instruction into the first subtask, the second subtask, and the third subtask. An execution sequence of the first subtask, the second subtask, and the third subtask may be: the first subtask→the second subtask→the third subtask. In other words, when the plurality of subtasks are executed, the subtasks need to be executed in a sequence of first executing the first subtask, then executing the second subtask, and finally executing the third subtask.

For example, the task corresponding to the user instruction is "buy a serving of celery-stuffed dumplings at a store B in an application A and deliver them to an address C". In this case, the system proxy may split the task into the following three subtasks through analysis:
first subtask: open the application A;
second subtask: search for the store B in the application A; and
third subtask: order a serving of celery-stuffed dumplings at the store B and deliver them to the address C.

For another example, the task corresponding to the user instruction is "buy a serving of celery-stuffed dumplings at a store B in an application A and deliver them to an address C". In this case, the system proxy may split the task into the following three subtasks through analysis:
first subtask: open the application A;
second subtask: obtain a historical order about "buy a serving of celery-stuffed dumplings at a store B in an application A and deliver them to an address C"; and
third subtask: enter a celery-stuffed dumpling product page by using the historical order, order a serving of celery-stuffed dumplings, and deliver them to the address C.

In the examples in which the tasks corresponding to the foregoing two user instructions are "buy a serving of celery-stuffed dumplings at a store B in an application A and deliver them to an address C", the first subtask, the second subtask, and the third subtask need to be performed in the sequence of first executing the first subtask, then executing the second subtask, and finally executing the third subtask.

It should be noted that the foregoing examples of splitting the tasks corresponding to the user instructions are merely used as two examples. In actual application, how to perform task splitting specifically needs to be determined based on a specific scenario and a specific task corresponding to the user instruction. This is not specifically limited.

In addition, in actual application, the plurality of subtasks obtained by splitting, by the system proxy, the task corresponding to the user instruction may alternatively not need to be sequentially executed in the specific execution sequence, which is determined based on a specific situation.

For example, the system proxy splits the task corresponding to the user instruction into the first subtask, the second subtask, and the third subtask. There is no related stipulation on the execution sequence of the first subtask, the second subtask, and the third subtask. To be specific, when the plurality of subtasks are executed, the plurality of subtasks may be executed synchronously and independently.

S604B: The system proxy distributes the plurality of subtasks to the one or more determined application control proxies.

In a possible implementation, the system proxy may separately distribute the plurality of subtasks to different application control proxies.

For example, the plurality of subtasks include the first subtask, the second subtask, and the third subtask. The system proxy may distribute the first subtask to the first application control proxy, distribute the second subtask to the second application control proxy, and distribute the third subtask to the third application control proxy.

In a possible implementation, the system proxy may distribute at least two of the plurality of subtasks to a same application control proxy.

For example, the plurality of subtasks include the first subtask, the second subtask, and the third subtask. The system proxy may distribute the first subtask and the second subtask to the first application control proxy, and distribute the third subtask to the third application control proxy.

In a possible implementation, the system proxy may synchronously distribute the plurality of subtasks to the one or more determined application control proxies.

For example, for the case in which the plurality of subtasks do not need to be sequentially executed in the specific execution sequence, the system proxy may synchronously distribute the plurality of subtasks to the one or more determined application control proxies.

For another example, for the case in which the plurality of subtasks need to be sequentially executed in the specific execution sequence, when distributing the plurality of subtasks to the one or more determined application control proxies, the system proxy may indicate a specific sequence of executing the plurality of subtasks by the one or more application control proxy systems.

In another possible implementation, the system proxy may synchronously distribute the plurality of subtasks to the one or more determined application control proxies in the specific sequence.

For example, for the case in which the plurality of subtasks need to be sequentially executed in the specific execution sequence, the system proxy may distribute the plurality of subtasks to the one or more determined application control proxies in the specific sequence.

For example, the plurality of subtasks include the first subtask, the second subtask, and the third subtask, and the execution sequence of the first subtask, the second subtask, and the third subtask is: the first subtask→the second subtask→the third subtask. The system proxy may first distribute the first subtask to the first application control proxy, distribute the second subtask to the second application control proxy after the first application control proxy completes execution of the first subtask, and distribute the third subtask to the third application control proxy after the second application control proxy completes execution of the second subtask.

A specific manner and method in which the system proxy distributes the plurality of subtasks are not limited, and may be determined based on a specific scenario, a specific task, and the like.

S605B: The one or more application control proxies execute the corresponding subtasks.

In a possible example, after the subtasks distributed by the system proxy are received, the one or more application control proxies invoke a related execution engine, tool, interface, or the like, to execute the corresponding subtasks. For example, the subtask is an operation in an application. The application control proxy may invoke the execution engine, the tool, the interface, or the like based on UI understanding, to perform related control on the application.

For example, the first application control proxy is configured to execute the first subtask, the second application control proxy is configured to execute the second subtask, and the third application control proxy is configured to execute the third subtask. The first application control proxy invokes a first execution engine to execute the first subtask, the second application control proxy invokes a second execution engine to execute the second subtask, and the third application control proxy invokes a third execution engine to execute the third subtask.

In a possible example, when distributing the plurality of subtasks to the one or more determined application control proxies, the system proxy indicates the specific sequence of executing the plurality of subtasks by the one or more application control proxy systems. For this case, the one or more application control proxies sequentially execute the corresponding subtasks in the sequence specified by the system proxy.

For example, the first application control proxy is configured to execute the first subtask, the second application control proxy is configured to execute the second subtask, and the third application control proxy is configured to execute the third subtask; and the execution sequence of the first subtask, the second subtask, and the third subtask is: the first subtask→the second subtask→the third subtask. S605B includes: The first application control proxy invokes the first execution engine to execute the first subtask; the second application control proxy invokes the second execution engine to execute the second subtask after the first subtask is completed; and the third application control proxy invokes the third execution engine to execute the third subtask after the second subtask is completed.

For another example, the first application control proxy is configured to execute the first subtask and the second subtask, and the third application control proxy is configured to execute the third subtask; and the execution sequence of the first subtask, the second subtask, and the third subtask is: the first subtask→the second subtask→the third subtask. S605B includes: The first application control proxy invokes the first execution engine to execute the first subtask, and invokes the second execution engine to execute the second subtask after the first subtask is completed; and the third application control proxy invokes the third execution engine to execute the third subtask after the second subtask is completed.

In the foregoing example, any two of the first execution engine, the second execution engine, and the third execution engine may be a same execution engine, or may be different engines. This is not specifically limited.

In some embodiments, in a process in which each application control proxy executes a respective subtask based on an indication of the system proxy, the application control proxy may further supplement the subtask based on a respective historical record (that is, second memory information) about a related historical task, and the application control proxy executes a task based on a respective supplemented subtask.

In an example, the one or more application control proxies are deployed on the electronic device. In this case, the one or more application control proxies may invoke the related execution engine, tool, interface, or the like of the electronic device to execute the corresponding subtasks.

In an example, the one or more application control proxies are deployed on the server. In this case, the one or more application control proxies may invoke a communication connection between the server and the electronic device, to send a respective invocation indication of an execution engine to the electronic device. Correspondingly, the electronic device invokes, based on the invocation indication of the execution engine of the one or more application control proxies, the related execution engine to execute the plurality of subtasks.

Based on the task execution solutions shown in FIG. 6A and FIG. 6B, when determining the task corresponding to the user instruction, the system proxy may perform fusion analysis and inference based on the historical record (for example, the session context) of executing the related historical task, to finally determine the task corresponding to the user instruction. In this way, the user does not need to input the excessively complex instruction. In addition, the task corresponding to the user instruction may be further accurately identified, to respond to the user instruction accurately, reliably, and in a timely manner.

In addition, based on the task execution solutions shown in FIG. 6A and FIG. 6B, interaction performed by following the specified communication specification between the two layers, namely, the system proxy and the application control proxy, and hierarchical management of session context at the two layers can avoid low efficiency, low accuracy, and low reliability of an analysis, inference, or task execution process caused by excessively long session context, assist each layer in performing related analysis, inference, or task execution, further improve timeliness, accuracy, and reliability of task execution, and improve isolation between layers in the multi-layer proxy architecture. This ensures secure and stable running of a system.

In addition, based on the task execution solutions shown in FIG. 6A and FIG. 6B, a two-layer proxy architecture is used to implement user instruction understanding, multi-round dialog integration, multi-modal analysis and inference, multi-layer task management and isolation, task switching, and the like in an easy-to-difficult manner by using the language model like the LLM or the MLLM. This not only can reduce inference costs, but also can improve inference efficiency and timeliness of a response to the user instruction.

In addition, based on the task execution solution in the multi-task scenario shown in FIG. 6B, flexible, timely, and accurate switching between a plurality of tasks can ensure smooth human-machine interaction and timely, accurate, and reliable task execution in the complex scenario.

In some embodiments, in the process in which the application control proxy executes the task, if some problems about the task need to be clarified or some details about the task need to be supplemented, the application control proxy may request the system proxy to interact with the user to clarify the task, and update or supplement the task based on a clarification result after completing clarification of the task, and continue to execute the task. For example, in the process in which the application control proxy executes the task, the system proxy may interact with the user based on a task clarification request of the application control proxy to obtain the clarification result, and indicate the application control proxy to continue to execute the task based on the clarification result until the task is successfully executed.

In an example, the task clarification may be performed in the task execution process in FIG. 6A, or may be performed in the task execution process in FIG. 6B.

In the task execution process in FIG. 6A, in a process in which the application control proxy executes the task based on the indication of the system proxy in S605A, if some problems about the task need to be clarified or some details about the task need to be supplemented, the application control proxy sends the task clarification request to the system proxy, where the request carries related information about the problems that need to be clarified or details that need to be supplemented. After receiving the task clarification request of the application control proxy, the system proxy performs one or more rounds of interaction with the user via a human-machine interaction module of the electronic device, for example, by using the smart assistant, to clarify the related problems or obtain the related details. After obtaining the clarification result, the system proxy sends the clarification result to the application control proxy. The application control proxy updates or supplements the task based on the clarification result and the second memory information, and continues to execute the task until the application control proxy successfully executes the task.

In the task execution process in FIG. 6B, in a process in which the one or more application control proxies execute the respective subtasks in S605B, if an application control proxy needs to clarify some problems about a subtask or supplement some details about a subtask, the application control proxy sends a task clarification request to the system proxy, where the request carries related information about the problems that need to be clarified or the details that need to be supplemented. After receiving the task clarification request of the application control proxy, the system proxy performs one or more rounds of interaction with the user via a human-machine interaction module of the electronic device, for example, by using the smart assistant in the electronic device, to clarify the related problems or obtain the related details. After obtaining the clarification result, the system proxy sends the clarification result to the application control proxy. The application control proxy updates or supplements the subtask based on the clarification result and the second memory information, and continues to execute the subtask until the application control proxy successfully executes the subtask.

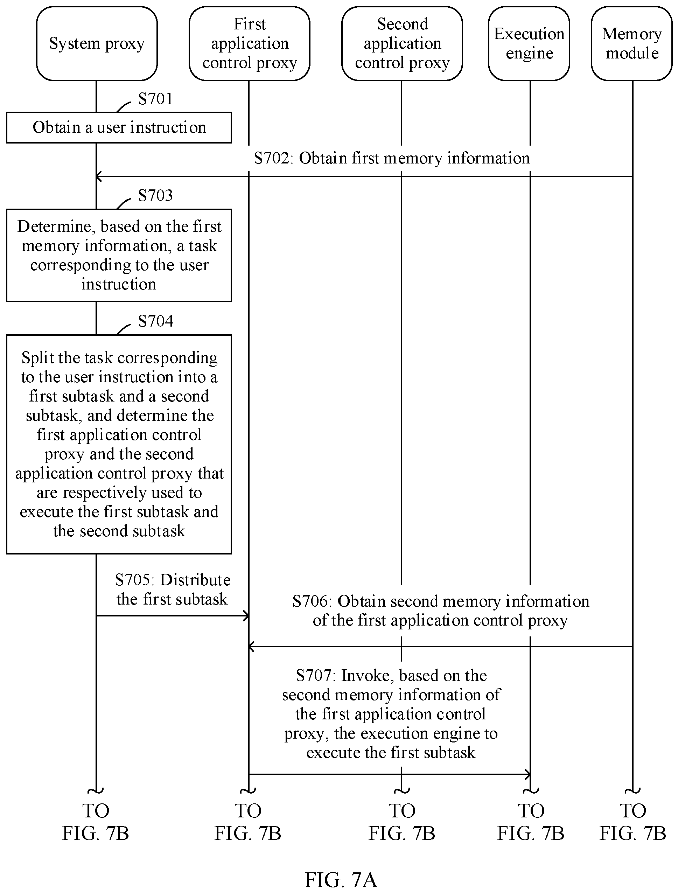

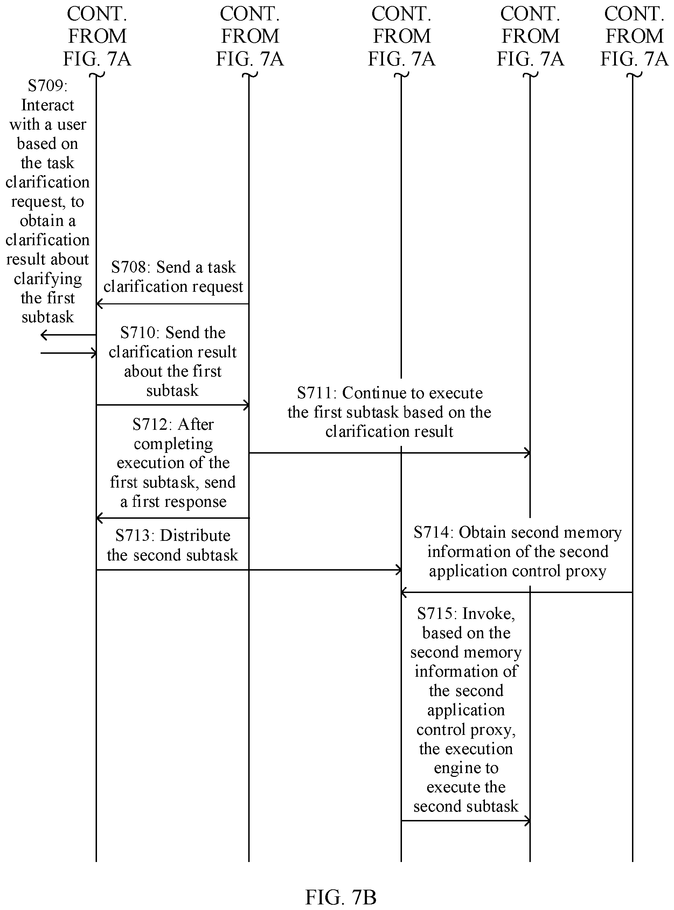

In an example, FIG. 7A and FIG. 7B are a diagram of a task execution interaction process according to an embodiment of this application by using an example in which execution of a task requires participation of a first application control proxy and a second application proxy, and execution of the task by the first application control proxy involves a task clarification process. As shown in FIG. 7A and FIG. 7B, a task for a user instruction may be executed by performing S701 to S715.

S701: The system proxy obtains the user instruction.

S702: The system proxy obtains first memory information.

In an example, the system proxy may obtain the first memory information from a memory module shown in FIG. 7A and FIG. 7B. The memory module is configured to store the first memory information, and the first memory information includes a historical record of executing a historical task by the system proxy. For example, the first memory information includes a historical record of executing, by the system proxy, a historical task related to the task corresponding to the user instruction.

In an example, the system proxy may alternatively obtain the first memory information from the smart assistant, and the smart assistant may obtain the first memory information from the memory module shown in FIG. 7A and FIG. 7B.

For example, the memory module shown in FIG. 7A and FIG. 7B may include a first memory module. The first memory module may be located in the system proxy, or may be located outside the system proxy. This is not specifically limited.

S703: The system proxy determines, based on the first memory information, the task corresponding to the user instruction.

S704: The system proxy splits the task corresponding to the user instruction into a first subtask and a second subtask, and determines the first application control proxy and the second application control proxy that are respectively used to execute the first subtask and the second subtask.

For example, an execution sequence of the first subtask and the second subtask is: the first subtask→the second subtask.

Certainly, in some embodiments, the first subtask and the second subtask may alternatively not need to be sequentially executed in a specific execution sequence, which is determined based on a specific situation. FIG. 7A and FIG. 7B are merely an example.

S705: The system proxy distributes the first subtask to the first application control proxy.

S706: The first application control proxy obtains second memory information of the first application control proxy.

In an example, the first application control proxy may obtain the second memory information of the first application control proxy from the memory module shown in FIG. 7A and

FIG. 7B. The memory module is configured to store the second memory information of the first application control proxy. The second memory information of the first application control proxy includes a historical record of executing a historical task by the first application control proxy. For example, the second memory information of the first application control proxy includes a historical record of executing, by the first application control proxy, a historical task related to the first subtask.

For example, the memory module shown in FIG. 7A and FIG. 7B may include a second memory module. The second memory module may be located in the first application control proxy, or may be located outside the first application control proxy. This is not specifically limited.

S707: The first application control proxy invokes, based on the second memory information of the first application control proxy, the execution engine to start to execute the first subtask.

S708: The first application control proxy sends a task clarification request to the system proxy in a process of executing the first subtask.

The task clarification request is used to request to clarify the first subtask.

In an example, the task clarification request carries related information about a problem that needs to be clarified or a detail that needs to be supplemented in the first subtask.

S709: The system proxy interacts with a user based on the task clarification request, to obtain a clarification result about the first subtask.

In an example, the system proxy may perform one or more rounds of interaction with the user via a human-machine interaction module of an electronic device, for example, by using the smart assistant in the electronic device, to clarify the problem related to the first subtask or obtain the related detail, and finally obtain the clarification result about the first subtask.

S710: The system proxy sends the clarification result about clarifying the first subtask to the first application control proxy.

S711: The first application control proxy continues to execute the first subtask based on the clarification result.

In an example, the first application control proxy may update or supplement the first subtask based on the clarification result, and continue to execute the first subtask.

S712: After completing execution of the first subtask, the first application control proxy sends a first response to the system proxy.

The first response indicates that the first subtask has been completed.

S713: The system proxy distributes the second subtask to the second application control proxy.

S714: The second application control proxy obtains second memory information of the second application control proxy.

In an example, the second application control proxy may obtain the second memory information of the second application control proxy from the memory module shown in FIG. 7A and FIG. 7B. The memory module is further configured to store the second memory information of the second application control proxy. The second memory information of the second application control proxy includes a historical record of executing a historical task by the second application control proxy. For example, the second memory information of the second application control proxy includes a historical record of executing, by the second application control proxy, a historical task related to the second subtask.

For example, the memory module shown in FIG. 7A and FIG. 7B may include a third memory module. The third memory module may be located in the second application control proxy, or may be located outside the second application control proxy. This is not specifically limited.

S715: The second application control proxy invokes, based on the second memory information of the second application control proxy, the execution engine to start to execute the second subtask.

For related descriptions of S701 shown in FIG. 7A and FIG. 7B, refer to the foregoing descriptions of S601A or S601B. For related descriptions of S702 and S703 shown in FIG. 7A and FIG. 7B, refer to the foregoing descriptions of S602A or S602B. For related descriptions of S704 shown in FIG. 7A and FIG. 7B, refer to the foregoing descriptions of S603B. For related descriptions of S705 and S713 shown in FIG. 7A and FIG. 7B, refer to the foregoing descriptions of S604B. For related descriptions of S706 and S707 and S714 and S715 shown in FIG. 7A and FIG. 7B, refer to the foregoing description of S605B. Details are not described herein again.

Based on the task execution solution shown in FIG. 7A and FIG. 7B, in a process of executing the subtask, when some problems about the subtask need to be clarified or some details about the subtask need to be supplemented, the application control proxy may request the system proxy to trigger task clarification (clarify), to clarify some problems about the task or supplement some details about the task through one or more rounds of interaction with the user, so as to further ensure accurate and reliable execution of the task for the user instruction.

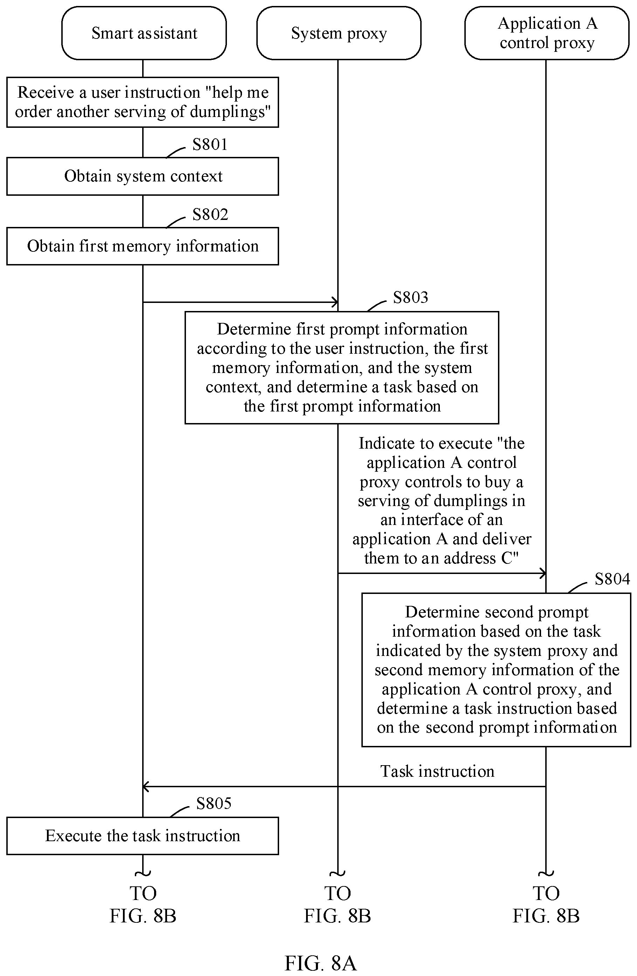

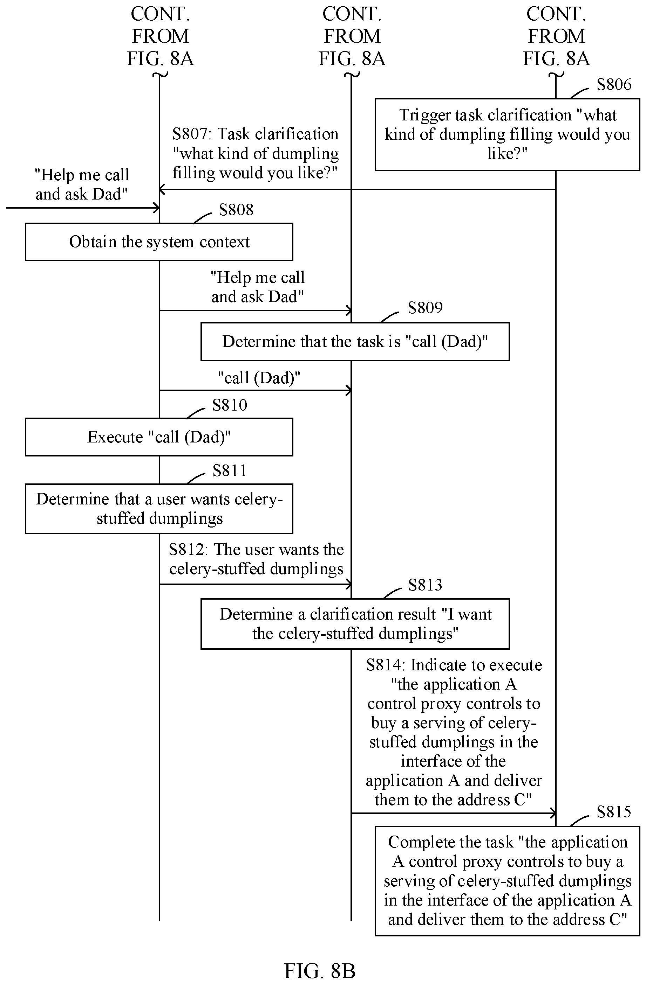

A specific implementation process of the task execution method provided in embodiments of this application is described below with reference to a specific scenario by using a user instruction "order another serving of dumplings" as an example. For example, FIG. 8A and FIG. 8B are a diagram of a task execution process for a user instruction in a specific application scenario according to an embodiment of this application.

As shown in S801 in FIG. 8A and FIG. 8B, after receiving a user instruction (query) "help me order another serving of dumplings", a smart assistant obtains system context, for example, including but not limited to: information (such as a device identifier, a device name, and a login user name) about an electronic device, a running application A (for example, a foreground application or a background application), and location information (for example, location coordinates collected by a GPS).

As shown in S802 in FIG. 8A and FIG. 8B, the smart assistant obtains first memory information of a system proxy. For example, the first memory information represents that a user likes B's dumplings, and represents that a home address of the user is an address C.

As shown in S803 in FIG. 8A and FIG. 8B, the system proxy determines, according to the user instruction, the first memory information, and the system context, first prompt information (for example, a first prompt) as input into a language model, and performs fusion analysis and inference on the first prompt information by using the language model, to determine that a task corresponding to the user instruction is "an application A control proxy controls to buy a serving of dumplings in an interface of the application A and deliver them to the address C". After determining the task, the system proxy distributes the task to the application A control proxy.

As shown in S804 and S805 in FIG. 8A and FIG. 8B, the application A control proxy determines, based on the task indicated by the system proxy and second memory information of the application A control proxy, second prompt information (for example, a second prompt) as input into the language model, and performs fusion analysis and inference on the second prompt information by using the language model, to determine and invoke an execution engine (for example, the smart assistant) to execute a task instruction, for example, search (dumplings), LastAction:False, AgentState:continue. In addition, the execution engine (for example, the smart assistant) executes the task instruction.

As shown in S806 and S807 in FIG. 8A and FIG. 8B, because the application A control proxy does not determine a type of dumpling filling that the user wants to buy, the application A control proxy requests the system proxy to trigger task clarification (clarify), to ask the user "what kind of dumpling filling would you like?".

As shown in S808 in FIG. 8A and FIG. 8B, after receiving "help me call and ask Dad", the smart assistant obtains the current system context, including but not limited to: the information (such as the device identifier, the device name, and the login user name) about the electronic device, the running application A (for example, the foreground application or the background application), the location information (for example, the location coordinates collected by the GPS), and interface information of the application A; and sends the information to the system proxy.

As shown in S809 and S810 in FIG. 8A and FIG. 8B, the system proxy determines, based on "help me call and ask Dad", the first memory information, and the system context, that the task is "call (Dad)", and invokes the execution engine (for example, the smart assistant) to execute the task.

As shown in S811 and S812 in FIG. 8A and FIG. 8B, after the call is completed, the smart assistant determines that the user wants celery-stuffed dumplings, and sends the information, the current system context, and the first memory information to the system proxy.

As shown in S813 and S814 in FIG. 8A and FIG. 8B, the system proxy determines, based on the foregoing information from the smart assistant, a clarification result "I want the celery-stuffed dumplings", and indicates the application A control proxy to continue to execute "the application A control proxy controls to buy a serving of celery-stuffed dumplings in the interface of the application A and deliver them to the address C".

As shown in S815 in FIG. 8A and FIG. 8B, the application A control proxy continues to execute the task based on an indication of the system proxy, and completes the task "the application A control proxy controls to buy a serving of celery-stuffed dumplings in the interface of the application A and deliver them to the address C".

Based on the task execution process for the user instruction in the specific application scenario shown in FIG. 8A and FIG. 8B, when determining the task corresponding to the user instruction "help me order another serving of dumplings", the system proxy may perform fusion analysis and inference based on the first memory information of the system proxy like the running application A, a store B that the user likes, the home address of the user, and the like, to finally determine the task corresponding to the user instruction "an application A control proxy controls to buy a serving of dumplings in an interface of the application A and deliver them to the address C". In addition, the system proxy may perform one or more rounds of interaction with the user to clarify the type of dumpling filling that the user wants. In this way, the user does not need to input an excessively complex instruction. In addition, the task corresponding to the user instruction may be further accurately identified, to respond to the user instruction accurately, reliably, and in a timely manner.

In addition, based on the task execution solution shown in FIG. 8A and FIG. 8B, interaction performed by following a specified communication specification between the two layers, namely, the system proxy and the application control proxy, and hierarchical management of memory information (such as the first memory information and the second memory information) at the two layers can avoid low efficiency, low accuracy, and low reliability of an analysis, inference, or task execution process caused by an excessively long history record (for example, session context), assist each layer in performing related analysis, inference, or task execution, further improve timeliness, accuracy, and reliability of task execution, and improve isolation between layers in a multi-layer proxy architecture. This ensures secure and stable running of a system. In addition, based on the task execution solution shown in FIG. 8A and FIG. 8B, a two-layer proxy architecture is used to implement user instruction understanding, multi-round dialog integration, multi-modal analysis and inference, multi-layer task management and isolation, task switching, and the like in an easy-to-difficult manner by using the language model like an LLM or an MLLM. This not only can reduce inference costs, but also can improve inference efficiency and timeliness of a response to the user instruction. In addition, based on the task execution solution in the multi-task scenario shown in FIG. 8A and FIG. 8B, flexible, timely, and accurate switching between a plurality of tasks can ensure smooth human-machine interaction and timely, accurate, and reliable task execution in a complex scenario.

It should be understood that the solutions in embodiments of this application may be properly combined for use, and explanations or descriptions of terms in embodiments may be cross-referenced or explained in embodiments. This is not limited.

It should be further understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It may be understood that, to implement functions of any one of the foregoing embodiments, the electronic device or the server includes a corresponding hardware structure and/or software module for performing each function. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the electronic device or the server may be divided into functional modules. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, division into modules is an example, and is merely a logical function division. In actual implementation, another division manner may be used.

It should be further understood that each module in the electronic device or the server may be implemented in a form of software and/or hardware. This is not specifically limited herein. In other words, the electronic device or the server is presented in a form of a functional module. The "module" herein may be an application-specific integrated circuit ASIC, a circuit, a processor that executes one or more software or firmware programs and a memory, an integrated logic circuit, and/or another component that can provide the foregoing functions.

In an optional manner, when software is used for implementing data transmission, the data transmission may be completely or partially implemented in a form of a computer program product. The computer program product includes one or more computer instructions. When the computer program instructions are loaded and executed on a computer, the procedures or functions according to embodiments of this application are completely or partially implemented. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired manner (for example, a coaxial cable, an optical fiber, or a digital subscriber line (digital subscriber line, DSL)) or a wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disk (digital video disk, DVD)), a semiconductor medium (for example, a solid-state disk solid-state disk (SSD)), or the like.

Method or algorithm steps described in combination with embodiments of this application may be implemented by hardware, or may be implemented by a processor by executing software instructions. The software instructions may include a corresponding software module. The software module may be stored in a RAM memory, a flash memory, a ROM memory, an EPROM memory, an EEPROM memory, a register, a hard disk, a removable hard disk, a CD-ROM, or a storage medium in any other form well-known in the art. For example, the storage medium is coupled to the processor, so that the processor can read information from the storage medium and write information to the storage medium. Certainly, the storage medium may alternatively be a component of the processor. The processor and the storage medium may be disposed in an ASIC. In addition, the ASIC may be located in an electronic device or a server. Certainly, the processor and the storage medium may alternatively exist as discrete components.

The foregoing descriptions about implementations allow a person skilled in the art to understand that, for the purpose of convenient and brief description, division into the foregoing functional modules is used as an example for illustration. In actual application, the foregoing functions may be allocated to different functional modules and implemented based on a requirement, that is, an inner structure of an apparatus is divided into different functional modules to implement all or some of the functions described above.

## Claims

1. A task execution method, applied to a system comprising a system proxy and at least one application control proxy, wherein the method comprises:
obtaining, by the system proxy, a user instruction;
determining, by the system proxy according to the user instruction and first memory information, a task corresponding to the user instruction, wherein the first memory information comprises a historical record of executing a historical task related to the task; and
indicating, by the system proxy, the application control proxy to execute the task.

2. The method according to claim 1, wherein the method further comprises:
in a process in which the application control proxy executes the task, interacting, by the system proxy, with a user based on a task clarification request of the application control proxy, to obtain a clarification result; and
indicating, by the system proxy, the application control proxy to continue to execute the task based on the clarification result.

3. The method according to claim 2, wherein interacting, by the system proxy, with the user based on the task clarification request of the application control proxy, to obtain the clarification result comprises:
interacting, by the system proxy, with the user based on the task clarification request of the application control proxy, to obtain information input by the user; and
analyzing, by the system proxy, the information input by the user to obtain the clarification result; or indicating, based on the information input by the user, the application control proxy to execute a clarification task, and obtaining the clarification result based on an execution result of the clarification task.

4. The method according to any one of claims 1 to 3, wherein the method further comprises:
executing, by the application control proxy, the task based on the task and second memory information of the application control proxy, wherein the second memory information comprises a historical record of executing, by the application control proxy, the historical task related to the task.

5. The method according to any one of claims 1 to 4, wherein the method further comprises:
splitting, by the system proxy, the task into a plurality of subtasks, wherein the plurality of subtasks comprise a first subtask and a second subtask; and determining, by the system proxy, a first application control proxy used to execute the first subtask, and determining a second application control proxy used to execute the second subtask; and
indicating, by the system proxy, the application control proxy to execute the task comprises:
distributing, by the system proxy, the first subtask to the first application control proxy, and distributing the second subtask to the second application control proxy.

6. The method according to any one of claims 1 to 5, wherein determining, by the system proxy according to the user instruction and the first memory information, the task corresponding to the user instruction comprises:
determining, by the system proxy based on a language model and according to the user instruction and the first memory information, the task corresponding to the user instruction.

7. The method according to any one of claims 1 to 6, wherein the system is deployed on a server, and obtaining, by the system proxy, the user instruction comprises:
receiving, by the system proxy, the user instruction from an electronic device; and
the method further comprises:
invoking, by the application control proxy, an execution engine, a tool, or an interface on the electronic device to execute the task.

8. The method according to any one of claims 1 to 6, wherein the system is deployed on an electronic device, and the method further comprises:
invoking, by the application control proxy, an execution engine, a tool, or an interface on the electronic device to execute the task.

9. The method according to any one of claims 1 to 8, wherein the system proxy is a system agent, and the application control proxy is a domain agent.

10. An electronic device, wherein the electronic device comprises:
a memory, configured to store computer program instructions; and
a processor, configured to execute the computer program instructions, to support the electronic device in implementing the method according to any one of claims 1 to 6 and claims 8 and 9.

11. A server, wherein the server comprises:
a memory, configured to store computer program instructions; and
a processor, configured to execute the computer program instructions, to support the server in implementing the method according to any one of claims 1 to 7 and 9.

12. A task execution system, wherein the task execution system comprises:
an electronic device and/or a server, configured to support the task execution system in implementing the method according to any one of claims 1 to 9.

13. A computer-readable storage medium, wherein the computer-readable storage medium stores computer program instructions, and when the computer program instructions are executed by a processing circuit, the method according to any one of claims 1 to 9 is implemented.

14. A computer program product comprising instructions, wherein when the computer program product is run on a computer, the computer is enabled to perform the method according to any one of claims 1 to 9.
